# EUROPEAN PATENT APPLICATION

(11) **EP 2 405 432 A1**
(43) Date of publication of application: **11.01.2012**
(21) Application number: 10748517.9
(22) Date of filing: 03.03.2010
(51) Int. Cl.: G11B 20/10, G11B 7/24, G11B 20/12, G11B 27/00, H04N 5/765, H04N 5/91

(54) **INFORMATION RECORDING MEDIUM, SERVER EQUIPMENT USING SAME, AND METHOD OF MANAGING USE OF INFORMATION RECORDING MEDIUM**

(30) Priority: 05.03.2009 JP 2009051727
(71) Applicant: Panasonic Corporation, Kadoma-shi Osaka 571-8501 (JP)
(72) Inventor: YAMAOKA, Masaru, Chuo-ku Osaka-shi Osaka 540-6207 (JP); MARUYAMA, Tooru, Chuo-ku Osaka-shi Osaka 540-6207 (JP); KOBAYASHI, Isao, Chuo-ku Osaka-shi Osaka 540-6207 (JP); FUJIMOTO, Keisuke, Chuo-ku Osaka-shi Osaka 540-6207 (JP); SHOJI, Mamoru, Chuo-ku Osaka-shi Osaka 540-6207 (JP); TAKAZAWA, Minoru, Chuo-ku Osaka-shi Osaka 540-6207 (JP)
(74) Representative: Kügele, Bernhard
(86) International application number: PCT/JP2010/001461
(87) International publication number: WO 2010/100918

(57) **Abstract**

A server device without a means for accessing an IC memory included in a data storage medium can check whether or not a data storage medium includes an IC memory. A portable optical disc medium (100) includes an IC memory (106) accessible through proximity wireless communication and a computer-readable recording part (101). The recording part (101) includes a user-data area (104) in which content data is recorded and a disc management information area (103) in which information for management of recording and reproducing the content data. In the disc management information area (103), medium identification information identifying the optical disc medium (100) and presence indication information indicating that the optical disc medium (100) includes presence of the IC memory (106) in a manner such that the presence indication information does not allow changing.

## Description

### [Technical Field]

The present invention relates to a data recording medium which includes an IC memory capable of proximity wireless communication, a server device for using the data recording medium, and a method of managing use of the data recording medium.

### [Background Art]

A conventional technique is disclosed which allows easy check of index information of a data recording medium without loading the data recording medium into a read device. The data recording medium includes an IC memory which is capable of proximity wireless communication. Identification information of the data recording medium is contactlessly read from the IC memory, and index information of the data recording medium corresponding to the read identification information is displayed on a display device or the like. With this technique, video or still image thumbnails of content of an optical disc are made available for check not by loading the optical disc into a recoding and reproducing device but only by approximating a remote control to the optical disc (see Patent Reference 1, for example).

Furthermore, another technique is disclosed in which a medium ID number is recorded in an IC memory which is included in an data recording medium and capable of proximity wireless communication, whereby information of a content recorded on an optical disc, such as a title of the content, the channel of the content as of recording, the date of the recording, the start time of the recording, duration, the end time of the recording, recording mode, and remaining disc space is displayed on a display device (see Patent Reference 2, for example).

Further another technique is disclosed in which information recorded in a predetermined area (for example, medium identification information indicated by a barcode formed in a bust cutting area (BCA)) on a signal surface of an optical disc is read when the optical disc is loaded, and title information for identifying content data stored in the optical disc is held in association with the optical disc. On the other hand, the optical disc has a label barcode which is printed thereon and stores identification information of the optical disc. A user has the optical disc at hand and reads the information in the label barcode with a barcode reader of the remote control to transmit the information to a data recording and reproducing device. The data recording and reproducing device identifies the optical disc based on the information in the transmitted label barcode and displays information on the content data on a monitor (see Patent Reference 3, for example).

### [Citation List]

### [Patent Literature]

[PTL 1] International Application Publication WO 2004/036560
[PTL 2] Japanese Unexamined Patent Application Publication No. 2005-116077
[PTL 3] Japanese Unexamined Patent Application Publication No. 2006-221725

### [Summary of Invention]

### [Technical Problem]

However, with these conventional configurations, content data may not be copied from a data recording medium including an IC memory without a proximity wireless communication device in the case where, for example, copying of content data is allowed only from data recording media including IC memories.

The present invention, conceived to address the problems, has an object of providing a data recording medium which allows even a server device without a means to access the IC memory included in the data recording medium to check whether or not the data recording medium includes an IC memory.

### [Solution to Problem]

In order to achieve the above object, a data recording medium according to an aspect of the present invention is a data recording medium which is portable, including: an IC memory accessible through proximity wireless communication; and a recording part which is readable by a computer, wherein the recording part includes: a content recording area in which content data is recorded; and a management information area in which management information on recording or reproducing of the content data is recorded, in the management information area, medium identification information identifying the data recording medium, and presence indication information indicating that the data recording medium includes the IC memory, are recorded in a manner such that the medium identification information and the presence indication information does not allow changing.

With this, a server device without a means for accessing an IC memory is capable of determining whether or not a data recording medium includes an IC memory by reading presence indication information recorded in a computer-readable recording part. The server device therefore is permitted to copy content data recorded on the recording part only when the data recording medium includes an IC memory.

Furthermore, a server device according to an aspect of the present invention is a server device which allows use of a data recording medium being portable, including a recording part readable by a computer, and being loaded in the server device, the server device including: a presence indication information read unit configured to read, from the recording part, presence indication information indicating whether or not the data recording medium includes an IC memory accessible through proximity wireless communication; a medium identification information read unit configured to read, from the recording part, medium identification information identifying the data recording medium; a content data read unit configured to read content data from the recording part; a copied content data generation unit configured to generate a copy of the content data as copied content data; a copied content data storage unit configured to store the copied content data; a copied content data storage control unit configured to register, in the copied content data storage unit, the generated copied content data in association with the read medium identification information; and a copied content data generation control unit configured to cause the copied content data generation unit to generate the copied content data when the presence indication information indicates that the data recording medium includes the IC memory, and not to cause the copied content data generation unit to generate the copied content data when the presence indication information indicates that the data recording medium does not include the IC memory.

With this, a server device without a means for accessing IC memories included in data recording media is capable of determining whether or not a data recording medium includes an IC memory by reading presence indication information recorded in a computer-readable recording part of the data recording medium. The server device therefore is permitted to generate copied content data only when the data recording medium includes an IC memory. Furthermore, the server apparatus is therefore capable of managing a data recording medium and copied content data in an integrative manner by managing the copied content data in association with the medium identification information.

Furthermore, a method of managing use of a data recording medium according to an aspect of the present invention, is a method of managing use of a data recording medium which is portable and includes a recording part readable by a computer, the method including: reading, from the recording part, presence indication information indicating whether or not the data recording medium includes an IC memory accessible through proximity wireless communication; reading, from the recording part, medium identification information identifying the data recording medium; reading content data from the recording part; generating a copy of the content data as copied content data; and registering, in a copied content data storage unit, the generated copied content data in association with the read medium identification information, wherein, in the generating, the copied content data is generated when the presence indication information indicates that the data recording medium includes the IC memory, and the copied content data is not generated when the presence indication information indicates that the data recording medium does not include the IC memory.

This provides the same advantageous effects as those of the above server device.

### [Advantageous Effects of Invention]

As described above, with a data recording medium according to an aspect of the present invention, even a server device without a means for accessing an IC memory is capable of determining whether or not a data recording medium includes an IC memory by reading presence indication information recorded in a computer-readable recording part. The server device therefore is permitted to copy content data recorded on the recording part only when the data recording medium includes an IC memory.

### [Brief Description of Drawings]

[Fig. 1] Fig. 1 is an outline view of an optical disc medium according to Embodiment 1 of the present invention.
[Fig. 2] Fig. 2 shows an exemplary data structure of BCA information stored in a BCA.
[Fig. 3] Fig. 3 shows a recording area of an IC memory and a structure of data to be recorded in the recording area.
[Fig. 4] Fig. 4 is a schematic diagram of a system which uses a data recording medium according to Embodiment 1 of the present invention.
[Fig. 5] Fig. 5 is a block diagram showing a characteristic configuration of a server device according to Embodiment 1 of the present invention.
[Fig. 6] Fig. 6 shows an internal data structure of data stored in an image file storage unit.
[Fig. 7] Fig. 7 is a flowchart showing a process flow of generation and update of an image file by the server device according to Embodiment 1 of the present invention.
[Fig. 8] Fig. 8 is a flowchart showing an operation of the server device according to Embodiment 1 of the present invention when the server device receives information from a terminal device.
[Fig. 9] Fig. 9 is a block diagram showing a characteristic configuration of a terminal device according to Embodiment 1 of the present invention.
[Fig. 10] Fig. 10 is a flowchart showing a process flow of reproduction and update of an image file by a terminal device according to Embodiment 1 of the present invention.
[Fig. 11] Fig. 11 is a schematic view of a system which uses a data recording medium according to Embodiment 2 of the present invention.
[Fig. 12] Fig. 12 is a block diagram showing a characteristic configuration of a server device according to Embodiment 2 of the present invention.
[Fig. 13] Fig. 13 is a flowchart showing a process flow of generation of an image file by a server device according to Embodiment 2 of the present invention.
[Fig. 14] Fig. 14 is a block diagram showing a characteristic configuration of a terminal device according to Embodiment 2 of the present invention.
[Fig. 15] Fig. 15 is a flowchart showing a process flow of update of an image file by the terminal device according to Embodiment 2 of the present invention.
[Fig. 16] Fig. 16 shows the Managed Copy authorized by a standard for copyright protection of media such as Blu-ray discs, the AACS.
[Fig. 17] Fig. 17 is a schematic view of the system according to Embodiment 3 of the present invention.
[Fig. 18] Fig. 18 is a flowchart showing a process flow of operations by the terminal device according to Embodiment 3 of the present invention.
[Fig. 19] Fig. 19 is a block diagram showing a characteristic configuration of a server device according to Embodiment 3 of the present invention.
[Fig. 20] Fig. 20 is a flowchart showing a process flow the server device according to Embodiment 3 of the present invention.
[Fig. 21] Fig. 21 is a block diagram showing a configuration of a server device according to a variation of the present invention.

### [Description of Embodiments]

One embodiment of the present invention is described below with reference to the drawings.

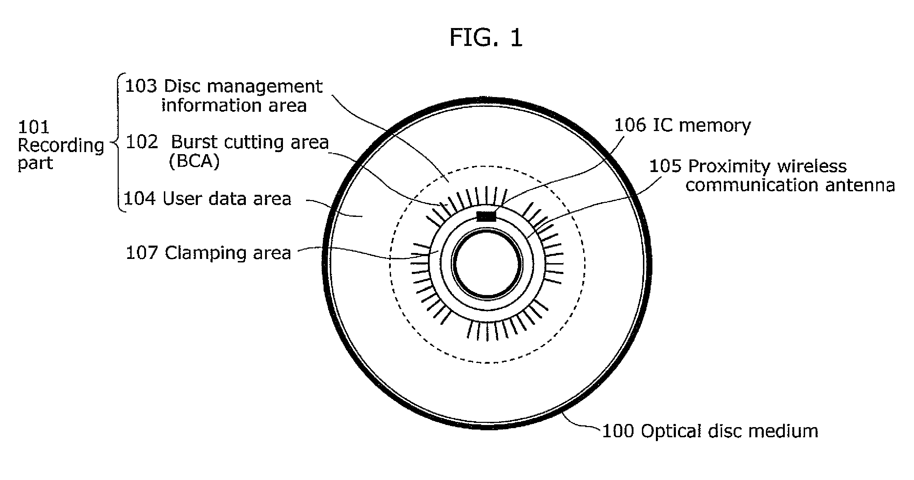

Fig. 1 is an outline view of an optical disc medium according to Embodiment 1 of the present invention.

An optical disc medium 100 is an exemplary data recording medium and includes at least a recording part 101 and an IC memory 106. The recording part 101 has a recording area which is readable by a computer. Specifically, the recording part 101 has, as the recording area, a disc management information area 103 including a burst cutting area (BCA) 102, and a user data area 104. In Embodiment 1, the optical disc medium 100 further has a proximity wireless communication antenna 105 and a clamping area 107.

The optical disc medium 100 is clamped on the clamping area 107 by a clamper (not shown) in an optical disc apparatus which records data on the optical disc medium 100 or reads information on the optical disc medium 100. In Embodiment 1, the proximity wireless communication antenna 105 and the IC memory 106 is arranged in the clamping area 107.

In the BCA 102, BCA information is pre-recorded using a barcode as shown in Fig. 1, where elongated bar marks are arranged on a ring in radial directions of the optical disc.

The barcode is formed in manufacturing of the optical disc medium 100. For example, after initializing a recording film of the optical disc medium 100, the barcode is formed by removing the recording film and a reflective film using laser trimming. BCA information stored in the barcode is therefore non-rewritable, read-only data.

In order to read the BCA information stored in the barcode, an optical disc apparatus in which the optical disc medium 100 is loaded rotates the optical disc 100 and irradiates the BCA 102 with a laser beam to obtain barcode data represented by change in level of reflection due to presence and absence of bar marks, that is, a reproduced signal.

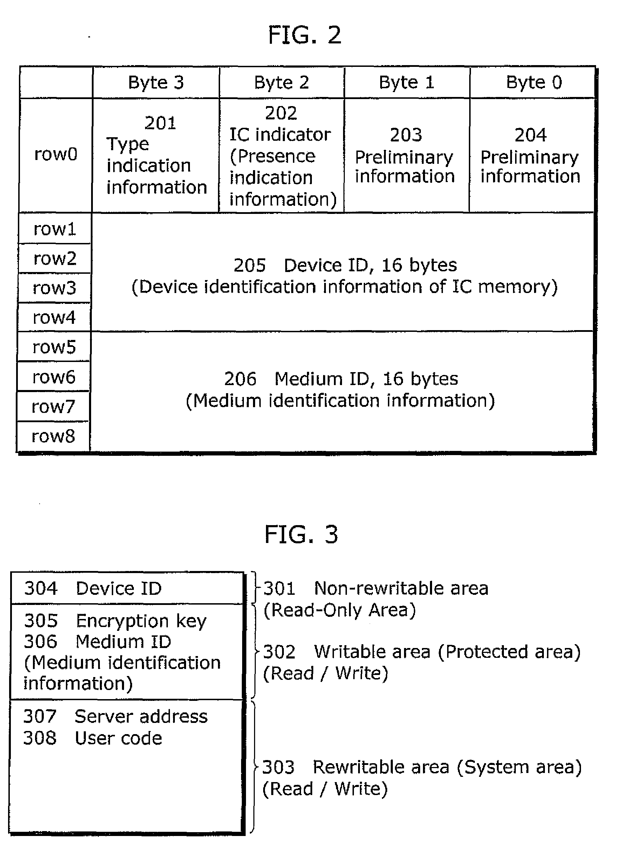

Fig. 2 shows an exemplary data structure of BCA information stored in the BCA 102.

Referring to Fig. 2, the data structure includes type indication information 201, an IC indicator 202, preliminary information 203 and 204, a device ID 205, and a medium ID 206. As shown in Fig. 2, each information element is recorded by the byte and arranged in four-byte units, for example.

The type indication information 201 is information that indicates types of optical disc media. The type indication information 201 indicates, for example, types of optical disc media (for example, CD, DVD, BD), or disc properties of optical disc media (for example, read-only, write-once, rewritable).

The data amount of the type indication information 201 is, for example, 1 byte.

The IC indicator 202 is information which indicates whether or not the IC memory 106 is included. In other words, the IC indicator 202 is equivalent to presence indication information which indicates that the optical disc medium 100 is provided with the IC memory 106.

The data amount of the IC indicator 202 is, for example, 1 byte.

The preliminary information 203 and 204 are saved as an area for recording information to be added.

The data amount of each of the preliminary information 203 and the preliminary information 204 is, for example, 1 byte. Because the preliminary information 203 and 204 have no data to store, they are filled with zeros.

The device ID 205 is device identification information which identifies the IC memory 106.

The device identification information may be a unique number (for example, a serial number) as information specific to the IC memory 106.

The data amount of the device ID 205 is, for example, 16 bytes.

The medium ID 206 is medium identification information which identifies the optical disc medium 100.

Information to be used as the medium ID 206 may be a unique number (for example, a serial number) as information specific to an optical disc medium, copyright information on data recorded in the user data area 104, or disc properties information. The disc properties information includes the number of recording layers of the optical disc medium, recording capacity or recording density of data to be recorded in the user data area 104, and identification information on an address management method.

The data amount of the media ID 206 is, for example, 16 bytes.

The disc management information area 103 includes an area in which the disc properties information is recorded and an area in which the optical disc apparatus records information on the optical disc medium for the purpose of information management.

The disc properties information includes information described for the medium ID 206 shown in Fig. 2, which indicates, for example, the number of recording layers of the optical disc medium, recording capacity or recording density of data to be recorded in the user data area 104, and an address management method. The disc properties information further includes, for example, output power of laser to record or reproduce data in the user data area 104.

The information managed by the optical disc apparatus is, for example, defect information of the optical disc medium, address information of data recorded in the user data area 104, and information specific to the optical disc apparatus which has recorded or reproduced data on the optical disc.

The user data area 104 has a structure which allows a user to record or reproduce desired data. The desired data is user data such as audio data or visual (video) data. The user data area 104 corresponds to a content data recording area.

The proximity wireless communication antenna 105 is an antenna to cause electromagnetic induction, such as a non-contact communication antenna (loop antenna). The proximity wireless communication antenna 105 is a coil of at least one turn and connected to the IC memory 106.

The IC memory 106 is an integrated circuit having a function of data storage or calculation, and also referred to as a semiconductor memory.

The IC memory 106 receives an externally transmitted communication wave through the proximity wireless communication antenna 105 and generates electric power according to the received signal. In addition, the IC memory 106 has a function of controlling storing of data about the received signal in the IC memory 106 or transmitting of data stored in the IC memory 106 through the proximity wireless communication antenna 105. Such transmission is performed by putting a signal based on the data stored in the IC memory on a reflected wave of the received wave.

The optical disc medium 100 thus performs proximity wireless communication with proximity wireless communication antenna 105 and the IC memory 106 in a proximate area where electromagnetism works, by using electromagnetic induction.

Fig. 3 shows the recording area of the IC memory 106 and a structure of data to be recorded in the recording area.

The IC memory 106 has a non-rewritable area 301, a writable area 302, and a rewritable area 303.

The non-rewritable area 301 is an area specifically for reading, and also referred to as a read-only area. In the non-rewritable area 301, a device ID 304, which is information specific to the IC memory, is recorded.

The device ID 304 is the same information as the device ID 205 recorded in the BCA 102, and a unique number (for example, a serial number) that identifies the IC memory 106.

The writable area 302 is an area in which data can be written, and also referred to as a protected area. In the writable area 302, an encryption key 305 and a medium ID 306 are recorded. The writable area 302 allows access from a reader-writer of the IC memory 106 after mutual authentication between the IC memory 106 and the reader-writer of the IC memory 106.

The encryption key 305 is encryption information necessary for accessing the IC memory 106 to read information, and copyright information (encryption information) on data to be recorded in the user data area 104 of the optical disc medium 100.

As with the medium ID 206 to be recorded in the BCA 102, the medium ID 306 is a unique number (for example, a serial number) which is information specific to the optical disc medium.

The information on the encryption key 305 and the medium ID 306 therefore needs no updating, and the information once recoded in the writable area 302 is protected.

The rewritable area 303 is an area where data can be changed, and also referred to as a system area. In the rewritable area 303, a server address 307 and a user code 308 are recorded.

The server address 307 is address information specifying a server which is a destination of a copy or a move of data recorded in the user data area 104 of the optical disc medium 100 as copied content data. The server address 307 is, for example, a unique number (for example, a serial number) which is information specific to a server, or a value set as an IP address.

The user code 308 is information which specifies a user who is allowed to access the data copied or moved onto the server and recorded thereon. The user code 308 is, for example, personal information or a password of the user.

This is the description for the optical disc medium according to Embodiment 1 of the present invention.

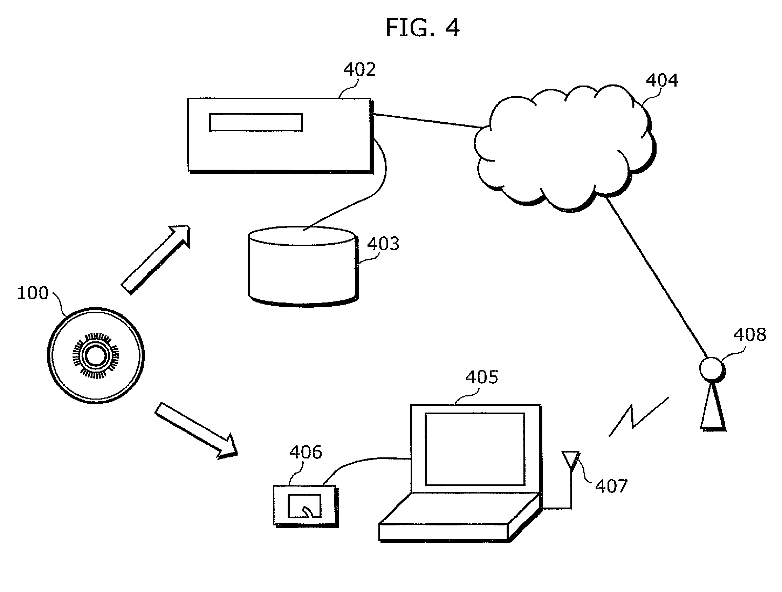

Fig. 4 is a schematic diagram of a system which uses the data recording medium according to Embodiment 1 of the present invention. The system according to Embodiment 1 includes a server device 402 and a terminal device 405.

The server device 402 has an optical disc drive (not shown, incorporated in the server device 402) and an image file storage unit 403, and is connected to a wide area network 404 such as the Internet. The optical disc drive reproduces data recorded on the optical disc medium 100 and records data on the optical disc medium 100. The image file storage unit 403 stores an image file generated from the data reproduced from the optical disc medium 100. The image file is encrypted based on the device ID 205. The image file is an example of copied content data. The image file storage unit 403 corresponds to a copied content data storage unit, which stores copied content data.

The image file is data including content data and a structure of a file system. In other words, the image file is copy data in which a file structure and a folder structure are identical to those of the original.

The terminal device 405 has a proximity wireless communication unit 406. The proximity wireless communication unit 406 reads the medium ID 306 from the IC memory 106 of the optical disc medium 100. Based on the read medium ID 306, the terminal device 405 reproduces or updates the image file stored in the image file storage unit 403 via the wide area network 404.

The terminal device 405 also has a wireless LAN antenna 407 as a means for accessing the communication network. Using the wireless LAN antenna 407, the terminal device 405 connects to an access point 408 which is connected to the wide area network 404, thereby accessing the wide area network 404. The terminal device 405 is therefore capable of establishing communication with the server device 402 via the wide area network 404.

It is to be noted that the server device 402 or the terminal device 405 is not necessarily connected to the wide area network 404. The server device 402 and the terminal device 405 may be connected in any manner such that they can communicate each other. For example, the server device 402 and the terminal device 405 may be connected to a local area network (LAN).

Hereinafter, the server device 402 is described in detail.

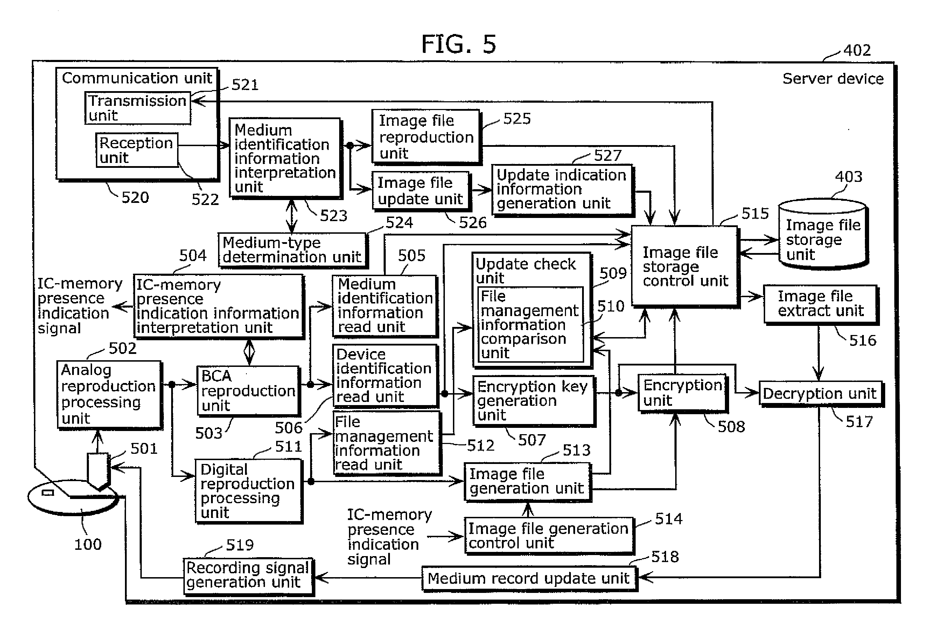

Fig. 5 is a block diagram showing a characteristic configuration of the server device 402 according to Embodiment 1 of the present invention.

As shown in Fig. 5, the server device 402 includes the image file storage unit 403, an optical head 501, an analog reproduction processing unit 502, a BCA reproduction unit 503, an IC-memory presence indication information interpretation unit 504, a medium identification information read unit 505, a device identification information read unit 506, an encryption key generation unit 507, an encryption unit 508, an update check unit 509, a digital reproduction processing unit 511, a file management information read unit 512, an image file generation unit 513, an image file generation control unit 514, an image file storage control unit 515, an image file extract unit 516, a decryption unit 517, a medium record update unit 518, a recording signal generation unit 519, a communication unit 520, a medium identification information interpretation unit 523, a medium-type determination unit 524, an image file reproduction unit 525, an image file update unit 526, and an update indication information generation unit 527.

The optical head 501 irradiates the optical disc medium 100 with a light beam, and outputs a received-light signal based on the amount of light reflected from the optical disc medium 100 to the analog reproduction processing unit 502.

The analog reproduction processing unit 502 obtains an analog reproduction signal by performing a predetermined analog reproduction process on the received-light signal and provides the analog reproduction signal to the BCA reproduction unit 503 and the digital reproduction processing unit 511.

The BCA reproduction unit 503 reads BCA information from an analog reproduction signal obtained from a BCA formed in the optical disc medium 100. The BCA reproduction unit 503 then provides the read BCA information to the IC-memory presence indication information interpretation unit 504, the medium identification information read unit 505, and the device identification information read unit 506.

The IC-memory presence indication information interpretation unit 504, which corresponds to a presence indication information read unit, reads an IC indicator included in the BCA information via the optical head 501, the analog reproduction processing unit 502, and the BCA reproduction unit 503. Furthermore, the IC-memory presence indication information interpretation unit 504 determines, based on the IC indicator included in the BCA information, whether or not the optical disc medium 100 includes the IC memory 106. When determining that the optical disc medium 100 includes the IC memory 106, the IC-memory presence indication information interpretation unit 504 provides an IC memory presence indication signal to the BCA reproduction unit 503 and the image file generation control unit 514.

The medium identification information read unit 505 extracts medium identification information from the BCA information and forwards the medium identification information to the image file storage control unit 515. In other words, the medium identification information read unit 505 reads medium identification information from the recording part 101 of the optical disc medium 100.

The device identification information read unit 506 extracts device identification information from the BCA information and forwards the device identification information to the image file storage control unit 515 and the encryption key generation unit 507. In other words, the device identification information read unit 506 reads device identification information from the recording part 101 of the optical disc medium 100.

The encryption key generation unit 507 generates an encryption key based on the device identification information read from the BCA and provides the encryption key to the encryption unit 508 and the decryption unit 517.

The digital reproduction processing unit 511 generates digital data by performing a predetermined digital reproduction process on the analog reproduction signal. The digital reproduction processing unit 511 then provides the resultant digital data to the file management information read unit 512 and the image file generation unit 513. The digital reproduction processing unit 511 corresponds to content data read unit, which reads content data from the recording part 101.

The file management information read unit 512 extracts file management information from the digital data and provides the file management information to the update check unit 509.

The image file generation control unit 514 corresponds to a copied content data generation control unit. The image file generation control unit 514 provides an image file generation command signal to the image file generation unit 513 upon receiving the IC memory presence indication signal from the IC-memory presence indication information interpretation unit 504. The image file generation control unit 514 thus permits the image file generation unit 513 to generate an image file only when the optical disc medium 100 includes an IC memory.

In other words, the image file generation control unit 514 causes the image file generation unit 513 to generate an image file when the IC indicator indicates that the optical disc medium 100 includes the IC memory 106. On the other hand, the image file generation control unit 514 does not cause the image file generation unit 513 to generate an image file when the IC indicator indicates that the optical disc medium 100 does not include the IC memory 106.

This prevents infringement of copyright by prohibiting generation of image files from conventional optical disc media including no IC memory. Specifically, when data is recorded in the recording part 101 of the optical disc medium 100 (an optical disc) including the IC memory 106 and an image file of the data is generated, generation of the image file is permitted only in the case where a medium in which the image file to be generated is stored in allows copyright management.

The image file generation unit 513 generates an image file based on the digital data upon receiving the image file generation command signal from the image file generation control unit 514, and provides the resultant image file as an generated image file to the encryption unit 508 and the update check unit 509. In other words, the image file generation unit 513 corresponds to a copied content data generation unit, which generates a copy of content data as copied content data.

The encryption unit 508 encrypts the generated image file based on a predetermined encryption rule (for example, an encryption rule in which a one-way function is used) under which the encryption key generated by the encryption key generation unit 507 based on the device identification information is used. The encryption unit 508 then provides the resultant image file as an encrypted image file to the image file storage control unit 515. In other words, the encryption unit 508 encrypts the copied content data based on the device identification information.

The update check unit 509 provides an image file storage information transmission command signal to the image file storage control unit 515.

When receiving the image file storage information transmission command signal, the image file storage control unit 515 checks whether or not an image file corresponding to the medium identification information and the device identification information is stored in the image file storage unit 403. When it turns out that the image file is stored there, the image file storage control unit 515 provides the image file as a stored image file to the update check unit 509.

The update check unit 509 has a file management information comparison unit 510. The file management information comparison unit 510 compares the file management information provided from the file management information read unit 512 and file management information included in the stored image file provided from the image file storage control unit 515. Based on the result of the comparison by the file management information comparison unit 510, the update check unit 509 determines which of the generated image file generated by the image file generation unit 513 and the stored image file stored in the image file storage unit 403 is newer, and then provides the determination result to the image file storage control unit 515.

In other words, the update check unit 509 determines whether or not the copied content data corresponding to the medium identification information read by the medium identification information read unit 505 has been updated. Specifically, the update check unit 509 determines whether or not the image file stored in the image file storage unit 403 has been updated, by comparing file management information recorded in the recording part 101 of the optical disc medium 100 loaded in the server device 402 and the file management information indicated by the image file stored in the image file storage unit 403.

When the determination result provided from the update check unit 509 indicates that the generated image file is newer, the image file storage control unit 515 registers the medium identification information, the device identification information, and the encrypted image file in association with each other in the image file storage unit 403. In other words, the image file storage control unit 515 corresponds to a copied content data storage control unit, which registers the generated copied content data in association with the read medium identification information in the copied content data storage unit.

The image file storage control unit 515 also provides the stored image file to the image file extract unit 516 when the determination result provided from the update check unit 509 indicates that the stored image file is newer.

The image file extract unit 516 extracts an image file from the stored image file and provides the resultant image file as an extracted image file to the decryption unit 517.

The decryption unit 517 decrypts the extracted image file based on a predetermined decryption rule under which the encryption key is used, and then provides the resultant image file as a decrypted image file to the medium record update unit 518. The decryption unit 517 is a unit which decrypts encryption corresponding to the encryption unit 508. The encryption unit 508 and the decryption unit 517 respectively encrypts and decrypts using a key which is made using device identification information unique to each IC memory. Generated key information is thus unique to each medium, and it is therefore impossible to decrypt encrypted data of a medium by using device identification information in an IC memory of another medium. Security of the copy image file is thus increased.

The medium record update unit 518 generates digital data based on the decrypted image file and provides the generated digital data to the recording signal generation unit 519. In other words, the medium record update unit 518 corresponds to a medium update unit, which updates, based on the copied content data stored in the image file storage unit 403, content of the optical disc medium 100 loaded in the server device 402 in the case where the update check unit 509 determines that the image file has been updated.

The recording signal generation unit 519 generates a recording signal based on the digital data to record the digital data on the optical disc medium 100. The recording signal generation unit 519 provides the generated recording signal to the optical head 501.

The optical head 501 records or updates data in the recording part 101 of the optical disc medium 100 by controlling the irradiation level of the light beam according to the recording signal.

The communication unit 520 has a transmission unit 521 and a reception unit 522.

The communication unit 520 provides the image file reproduction unit 525 with medium identification information extracted from received information received from a terminal device 405 through the reception unit 522.

The image file reproduction unit 525 provides a reproduction transmission command signal and the medium identification information to the image file storage control unit 515.

Receiving the reproduction transmission command signal, the image file storage control unit 515 provides the stored image file corresponding to the medium identification information to the communication unit 520.

The communication unit 520 transmits the stored image file to the terminal device 405 via the transmission unit 521. The communication unit 520 also receives, via the reception unit 522, an update request for an update of an image file from the terminal device 405 to which the stored image file is being transmitted from the transmission unit 521. The communication unit 520 provides the received update request to the medium identification information interpretation unit 523.

The medium identification information interpretation unit 523 provides the medium identification information received from the communication unit 520 to the medium-type determination unit 524.

The medium-type determination unit 524 determines types of media based on the medium identification information and provides a determination result to the medium identification information interpretation unit 523.

When the medium is determined to be of a recordable medium type, the medium identification information interpretation unit 523 sends an image file update request to the image file update unit 526.

The image file update unit 526 provides the update indication information generation unit 527 with an image file updated upon the image file update request as an updated image file.

The update indication information generation unit 527 generates update indication information for allowing recognition of the update of the image file, and provides the image file storage control unit 515 with the updated image file to which the update indication information is attached. The updated image file is referred to as an image file attached with update indication information.

Upon receiving the image file attached with update indication information, the image file storage control unit 515 updates the stored image file which is being transmitted to the communication unit 520.

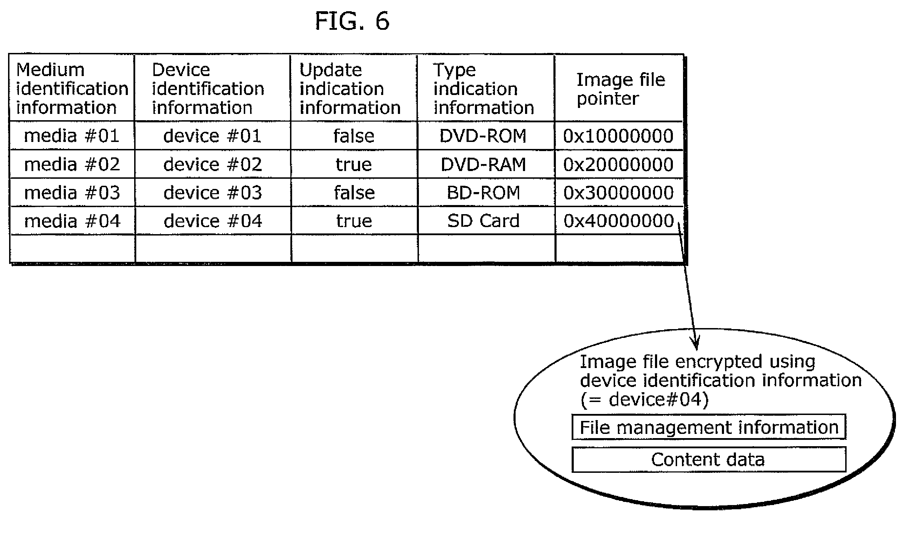

Fig. 6 shows an internal data structure of data stored in the image file storage unit 403.

As shown in Fig. 6, the data stored in the image file storage unit 403 includes medium identification information, device identification information, update indication information, medium-type indication information, and image file pointers which are associated with respective image files.

The medium identification information indicates IDs, such as "media#01" and "media#02", each of which is uniquely assigned to the optical disc medium 100.

The device identification information indicates IDs, such as "device#01" and "device#02", each of which is uniquely assigned to the IC memory of the optical disc medium 100.

The update indication information indicates the status of synchronization between the stored image file stored in the image file storage unit 403 and the generated image file recorded on the optical disc medium 100. For example, when the stored image file stored in the image file storage unit 403 is updated through the terminal device 405, the update indication information is set to "false".

When the information recorded on the optical disc medium 100 is updated using the stored image file which has been updated through the terminal device 405, the update indication information is set to "true". In other words, the update indication information is set to "true" when the stored image file stored in the image file storage unit 403 and the generated image file recorded on the optical disc medium 100 is synchronized.

The type indication information indicates the medium type of the optical disc medium 100 which is the source of an image file, such as DVD-ROM or BD-ROM.

The image file pointers each indicate a starting address in a memory area where an image file is stored in an memory space of the image file storage unit 403.

The stored image file includes file management information and content data. The stored image file is encrypted in accordance with a predetermined rule, using an encryption key generated based on the device identification information. For example, for file management information and content data read from the optical disc medium 100 having medium identification information of "media#02", an encrypted image file encrypted using an encryption key generated based on the device identification information of "device#02" is stored in a memory area which starts from the memory address of "0x20000000".

In the image file storage unit 403, copied content data is thus registered in association with medium identification information.

Hereinafter, operations in the server device 402 configured as described above are described.

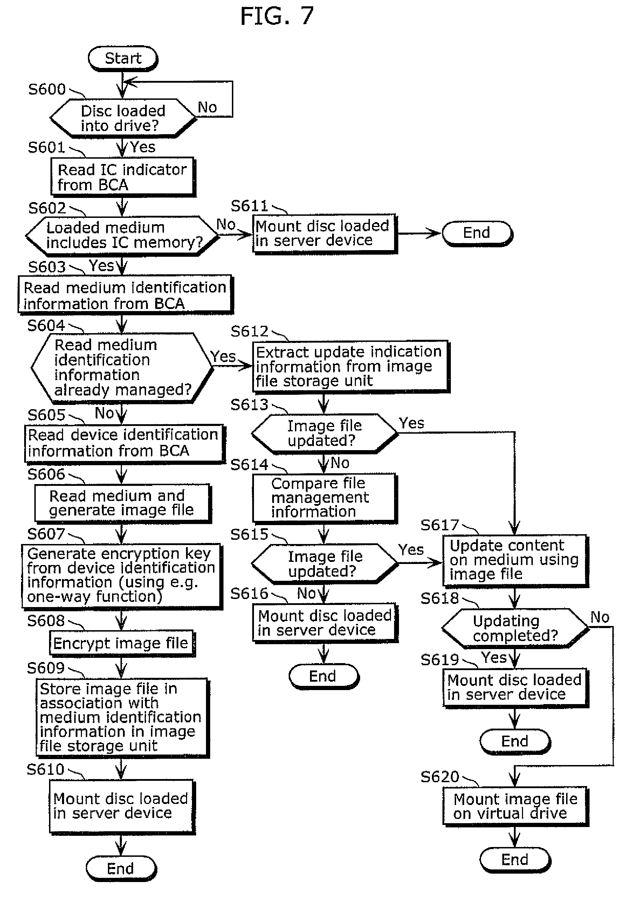

Fig. 7 is a flowchart showing a process flow of generation and update of an image file by the server device 402 according to Embodiment 1 of the present invention.

The server device 402 performs polling to determine whether or not the optical disc medium 100 is loaded (S600). In the case where the optical disc medium 100 is not loaded (No in S600), the server device 402 repeats the determination as to whether or not the optical disc medium 100 is loaded.

When the optical disc medium 100 is loaded (Yes in S600), the IC-memory presence indication information interpretation unit 504 reads BCA information from the BCA formed in the optical disc medium 100 through the optical head 501, the analog reproduction processing unit 502, and the BCA reproduction unit 503, and then reads an IC indicator from the read BCA information (S601).

As described above, the IC indicator indicates whether or not the optical disc medium 100 includes the IC memory 106. The IC-memory presence indication information interpretation unit 504 then determines, based on the IC indicator, whether or not the optical disc medium 100 includes the IC memory 106IC indicator (S602).

When the optical disc medium 100 does not include the IC memory 106 (No in S602), the server device 402 mounts the loaded optical disc medium 100 (S611), and ends the process. On the other hand, when the optical disc medium 100 includes the IC memory (Yes in S602), the medium identification information read unit 505 reads medium identification information from the BCA information (S603).

The image file storage control unit 515 determines whether or not the read medium identification information is already managed by the image file storage unit 403 (S604). In other words, the image file storage control unit 515 determines whether or not the image file corresponding to the read medium identification information is already stored in the image file storage unit 403.

In the case where the read medium identification information is not under the management (No in S604), the server device 402 performs a process to additionally register the image file in the image file storage unit 403, to put the image file under the management (S605 to S610). Specifically, the device identification information read unit 506 reads device identification information from the BCA (S605).

Next, the image file generation unit 513 reads the optical disc medium 100 through the optical head 501, the analog reproduction process unit 502, and the digital reproduction processing unit 511, to generate an image file (S606). More specifically, the image file generation control unit 514 generates an image file generation command signal. The image file generation unit 513 then generates an image file according to the generated image file generation command signal. Next, the encryption key generation unit 507 generates an encryption key based on the read device information (S607). Furthermore, the encryption unit 508 encrypts the generated image file using the generated encryption key (S608).

Next, the image file storage control unit 515 registers the encrypted image file in the image file storage unit 403 in association with the medium identification information (S609). Finally, the server device 402 mounts the loaded optical disc medium 100(S610) and ends the process. The server device 402 thus performs a process to additionally register the image file in the image file storage unit 403 to put the image file under the management (S605 to S610).

On the other hand, in the case where the read medium identification information is already under the management of the image file storage unit 403 (Yes in S604), the update check unit 509 extracts update indication information corresponding to the medium identification information from the image file storage unit 403 through the image file storage control unit 515 (S612).

The update check unit 509 determines, based on the extracted update indication information, whether or not the stored image file stored in the image file storage unit 403 has been updated (S613).

In the case where the update check unit 509 determines, based on the extracted update indication information, that the stored image file has not been updated (No in S613), the file management information comparison unit 510 compares the file management information of the stored image file and the file management information of the loaded optical disc medium 100 (S614). The update check unit 509 then determines, based on the result of the comparison, whether or not the stored image file stored in the image file storage unit 403 has been updated (S615). When information recorded on the optical disc medium 100 is updated on an optical disc device which lacks a communication function, the update indication information stored in the image file storage unit 403 included in the server device cannot be the basis of the determination as to update statuses of the stored image file. Here, the update check unit 509 determines, based on the result of the comparison, whether or not the stored image file has been updated. Specifically, in the case where, for example, the file management information of the stored image file and the file management information of the loaded optical disc medium 100 are identical, the update check unit 509 determines that the stored image file has not been updated. On the other hand, in the case where, for example, the file management information of the stored image file and the file management information of the loaded optical disc medium 100 are not identical, the update check unit 509 determines that the stored image file has been updated.

The update check unit 509 thus highly correctly determines an update status of the stored image file even when update indication information cannot be the basis of the determination as to update statuses of the stored image file.

In the case where the update check unit 509 determines, based on the file management information, that the stored image file has not been updated (No in S615), the server device 402 mounts the loaded optical disc medium 100 (S616) and ends the process.

On the other hand, in the case where the update check unit 509 determines, based on the update indication information (Yes in S613) or on the file management information (Yes in S615), that the stored image file has been updated, the server device 402 updates content data recorded on the optical disc medium 100 loaded in the server device 402, using the stored image file stored in the image file storage unit 403 (S617).

Next, the server device 402 determines whether or not the updating of the content data recorded on the optical disc medium 100 is completed (S618). In the case where the updating is completed (Yes in S618), the server device 402 mounts the loaded optical disc medium 100 (S619) and ends the process.

On the other hand, when the updating is not completed (No in S618), the server device 402 mounts the stored image file stored in the image file storage unit 403 on a virtual drive (S620) and ends the process. Even when the updating takes a long time, the server device 402 immediately becomes ready to reproduce the updated image file by mounting the image file on a virtual drive as in Embodiment 1.

The server device 402 thus generates and updates an image file.

Hereinafter, an operation of the server device 402 upon receiving information from the terminal device 405 is described.

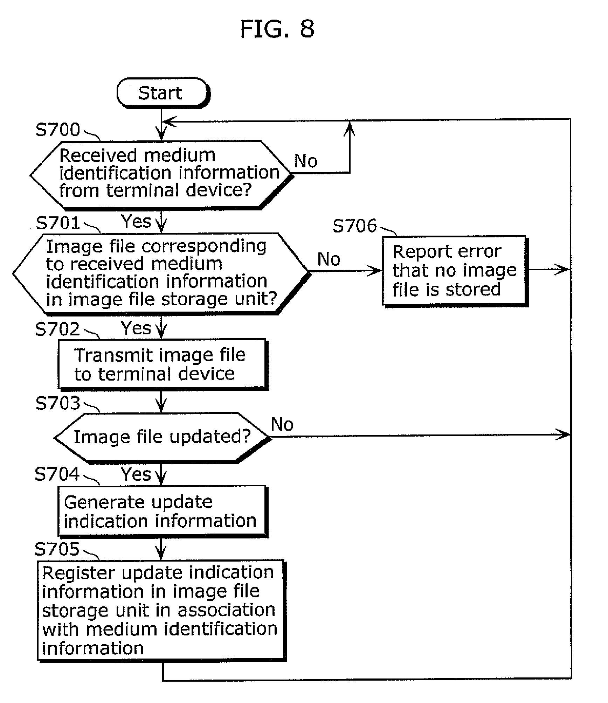

Fig. 8 is a flowchart showing an operation of the server device 402 according to Embodiment 1 of the present invention when the server device 402 receives information from the terminal device 405. The server device 402 continues performing reception polling to determine whether or not the server device 402 has received medium identification information from the terminal device 405 until the terminal device 405 receives it (S700). In other words, when the server device 402 has not received medium identification information from the terminal device 405 (No in S700), the server device 402 repeats determination as to whether the server device 402 has received medium identification information from the terminal device 405.

When the server device 402 receives medium identification information from the terminal device 405 (Yes in S700), the communication unit 520 queries the image file storage control unit 515 as to whether an image file corresponding to the received medium identification information is stored in the image file storage unit 403 (S701). In other words, the image file storage control unit 515 determines whether or not the image file corresponding to the received medium identification information is already stored in the image file storage unit 403.

When no image file corresponding to the received medium identification information is stored in the image file storage unit 403 (No in S703), the communication unit 520 reports, to the terminal device 405, an error that the no corresponding image file is stored (S706), and the server device 402 returns to the reception polling (S700).

When an image file corresponding to the received medium identification information is stored in the image file storage unit 403 (Yes in S701), the communication unit 520 transmits the stored image file corresponding to the received medium identification information to the terminal device 405 (S702).

The server device 402 determines whether or not the stored image file has been updated by the terminal device 405 (S703). Specifically, the server device 402 determines whether or not the server device 402 has received, from the terminal device 405 to which he stored image file is transmitted, a request for an update of an image file.

When the stored image file has not been updated by the terminal device 405 (No in S703), the server device 402 returns to the reception polling (S700).

On the other hand, when the stored image file has been updated by the terminal device 405 (Yes in S703), the update indication information generation unit 527 generates update indication information (S704). Furthermore, the image file update unit 526 updates the image file. Next, the image file storage control unit 515 associates the update indication information and the updated image file with the medium identification information and registers them in the image file storage unit 403, and then returns to the reception polling from the terminal device 405 (S700).

Although it is the medium identification information that the server device 402 receives through reception polling from the terminal device 405 in the example shown in Embodiment 2, the server device 402 may receive device identification information instead.

Although the data stored in the image file storage unit 403 includes medium identification information, device identification information, update indication information, medium type information, and image file pointers in the example shown in Embodiment 1, the data to be stored in the image file storage unit 403 may include only unique information which identifies an image file stored in the image file storage unit 403.

Although the data stored in the image file storage unit 403 includes medium identification information and device identification information corresponding to each image file in the example of Embodiment 1, the data to be stored in the image file storage unit 403 may have a unique ID which is generated from a given set of one or more information items owned by the optical disc medium 100.

Although it is data of medium identification information and a request for an update of an image file that the server device 402 receives from the terminal device 405 in the example of Embodiment 1, the server device 402 may receive an updated image file instead.

Although the device identification information in the example of Embodiment 1 is an ID unique to the IC memory, the device identification information is not limited to information masked in a semiconductor process.

Although the newest image file is determined by comparing the file management information obtained from the optical disc medium 100 and the file management information included in the stored image file stored in the image file storage unit 403 in the example of Embodiment 1, the newest image file may be determined by comparing the generated image file of the optical disc medium 100 and the stored image file stored in the image file storage unit 403.

Hereinafter, the terminal device 405 is described in detail.

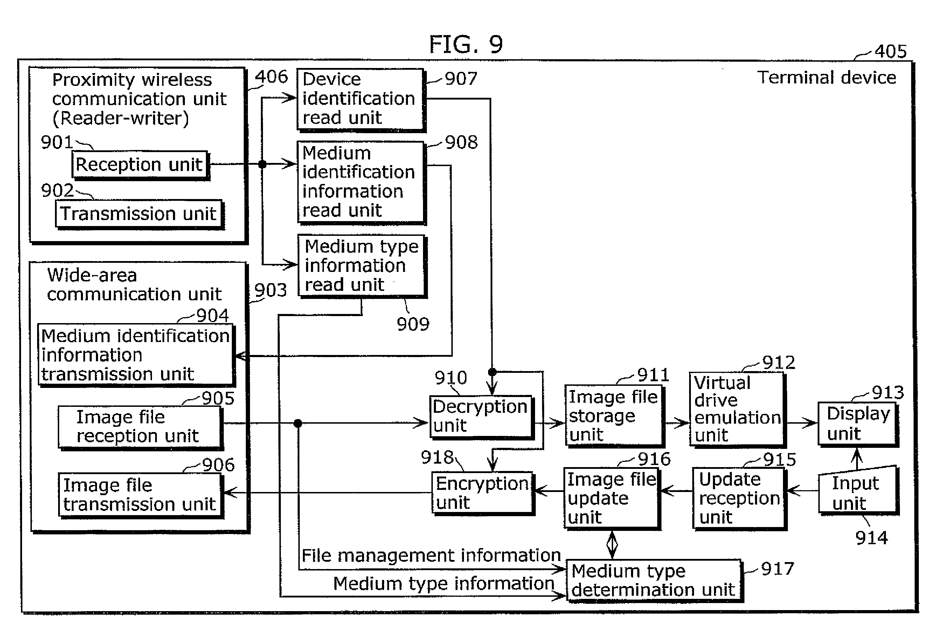

Fig. 9 is a block diagram showing a characteristic configuration of the terminal device 405 according to Embodiment 1 of the present invention.

The terminal device 405 according to Embodiment 1 includes the proximity wireless communication unit (reader-writer) 406 and a wide-area communication unit 903 as a means for external communication. The terminal device 405 further includes a device identification information read unit 907, a medium identification information read unit 908, a medium type information read unit 909, a decryption unit 910, an image file storage unit 911, a virtual drive emulation unit 912, a display unit 913, an input unit 914, an update reception unit 915, an image file update unit 916, a medium type determination unit 917, and an encryption unit 918.

The proximity wireless communication unit 406 has a reception unit 901 and a transmission unit 902, and exchanges data with the IC memory 106. Based on information read from the IC memory 106, the device identification information read unit 907 reads a device ID unique to the IC memory (device identification information). The medium identification information read unit 908 reads medium identification information stored in the IC memory 106 (medium ID). The medium type information read unit 909 reads medium type information (such as rewritable, write-once, read-only) from the IC memory 106 of the optical disc medium 100. Here, the medium type information is attribute information which indicates whether or not data recorded on the medium is updatable. For example, the medium type information indicates an attribute of the optical disc medium 100 such as rewritable, write-once, or read-only.

The wide-area communication unit 903 has a medium identification information transmission unit 904, an image file reception unit 905, and an image file transmission unit 906. The medium identification information transmission unit 904 transmits the medium identification information read by the medium identification information read unit 908 to the server device 402 to request the server device 402 for an image file corresponding to the medium identification information. The image file reception unit 905 receives an image file transmitted from the server device 402.

The received image file is encrypted. The decryption unit 910 decrypts the image file using the device identification information. The device identification information is ID information unique to the IC memory and one item of the device identification information is associated with media on a one-to-one basis, and therefore decryption of the image file requires the corresponding device, thus providing a secure system.

The image file storage unit 911 stores decrypted image file. The virtual drive emulation unit 912 provides an emulator which allows virtual access to the medium using the image file stored in the image file storage unit 911. The terminal device 405 thereby virtually records or reproduces data on the medium according to a user's operation received by the input unit 914, even without a drive device capable of reading data recorded in the recording part 101 of the optical disc medium 100, by using the emulator displayed on the display unit 913.

In the case where data is virtually recorded on the medium, that is, the emulator is used for updating the image file, the update reception unit 915 receives the updating data and the image file update unit 916 updates the image file.

At this time, the medium-type determination unit 917 determines, based on the medium type information read by the medium type information read unit 909, whether or not the updating of the image file is permitted. The medium-type determination unit 917 then generates a determination signal which indicates the determination result and transmits the signal to the image file update unit 916. For example, when the medium type is rewritable, the medium-type determination unit 917 determines that updating of the image file is permitted. For example, when the medium type is write-once and the medium has free space, the medium-type determination unit 917 determines that updating of the image file is permitted. For example, when the medium type is read-only, the medium-type determination unit 917 determines that updating of the image file is not permitted.

For these cases, the IC memory 106 may further store information which indicates a free area or the amount of free space of the recording part 101 of the optical disc medium 100. In order to store such information in the IC memory 106, the optical disc drive of the server device 402 needs to be configured to have a means for accessing the IC memory 106 to store the information of the free area or the amount of free space in the IC memory 106 in accordance with update of content data on the optical disc, as shown in Embodiment 2 below. This allows the terminal device 405 to determine whether or not the image file is updatable by determining whether or not the recording part 101 of the optical disc medium 100 even when the optical disc medium 100 is a write-once medium.

The encryption unit 918 encrypts the content of the image file using the device identification information read by the device identification information read unit 907. The image file transmission unit 906 then transmits the encrypted image file to the server device 402, so that the image file stored in the server device 402 is updated.

Hereinafter, operations in the terminal device 405 configured as described above are described.

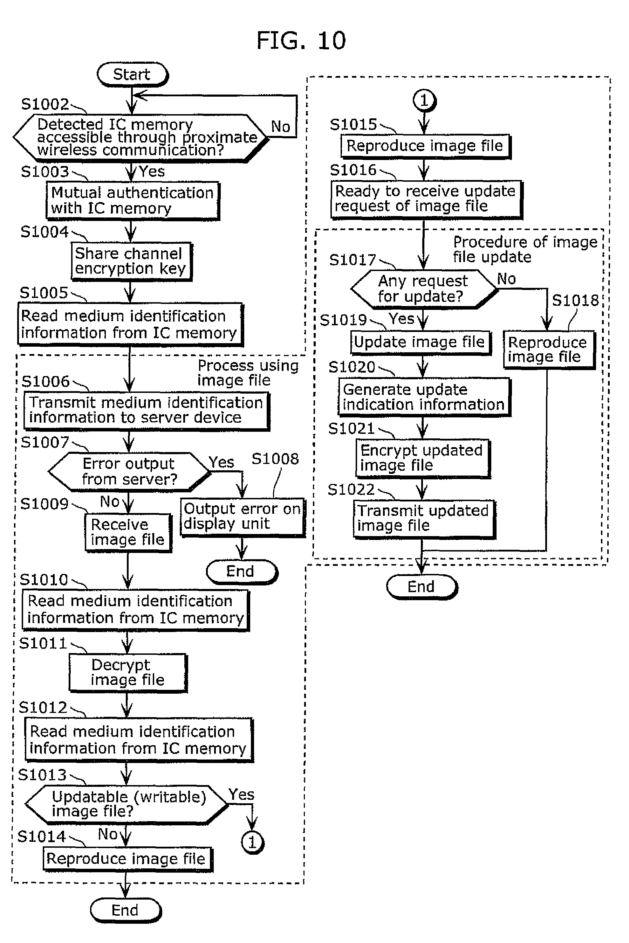

Fig. 10 is a flowchart showing a process flow of reproduction and update of an image file by a terminal device according to Embodiment 1 of the present invention.

First, the terminal device 405 performs polling to determine whether or not an IC memory is detected which is capable of proximity wireless communication with the proximity wireless communication unit (reader-writer) 406 (S1002).

When no IC memory capable of proximity wireless communication is detected (No in S1002), the terminal device 405 continues the polling. On the other hand, when an IC memory capable of proximity wireless communication is detected (Yes in S1002), the terminal device 405 performs mutual authentication with the IC memory 106 (S1003). When the mutual authentication has turned out to be successful, the terminal device 405 shares a channel encryption key with the IC memory 106 (S1004). Next, the medium identification information read unit 908 reads medium identification information from the IC memory 106 via the proximity wireless communication unit 406 (S1005).

The medium identification information 904 transmits the read medium identification information to the server device 402 (S1006). Next, the wide-area communication unit 903 determines whether or not data communication with the server device 402 was successful (S1007).

When there is an error output from the server device 402 indicating unsuccessful data communication with the server device 402 (Yes in S1007), the terminal device 405 outputs an error on the display unit 913 (S1008) and ends the process. Because data may not be transmitted or received properly due to a temporary problem with data communication, the terminal device 405 may output an error on the display unit 913 based on a result of several attempts of data communication with the server device 402.

When there is no error output (No in S1007), the image file reception unit 905 receives an image file from the server device 402 (S1009). Next, the device identification information read unit 907 reads device identification information from the IC memory 106 via the proximity wireless communication unit 406 (S1010). The decryption unit 910 decrypts the received image file using the device identification information (S1011).

Next, the medium type information read unit 909 reads medium type information from the IC memory 106 through the proximity wireless communication unit 406 (S1012). The medium-type determination unit 917 determines, based on the read medium type information, whether or not the image file is updatable (writable) (S1013).

When the medium type information indicates that the medium is not updatable (for example, read-only) (No in S1013), the terminal device 405 performs only reproduction of the image file (S1014).The reproduction of the image file is performed through an emulator which the virtual drive emulation unit 912 generates using the image file stored in image file storage unit 911 and displays on the display unit 913.

On the other hand, in the case where the medium type information indicates that the medium is updatable (for example, rewritable or write-once) (Yes in S1013), the terminal device 405 reproduces t file (S1015). The update reception unit 915 then becomes ready to receive a request for an update of the image file (S1016). In the case where there is no request for an update (No in S1017), the image file is only reproduced and the process ends (S1018). On the other hand, when there is a request for an update (Yes in S1017), the image file update unit 916 updates the image file (S1019). The image file update unit 916 then generates update indication information as well as updates the image file (S1020). The update indication information is information which indicates whether or not the image file is updated. For example, the update indication information includes information on the date of the update of the image file or information on updated content data. Therefore, by referring to the update indication information, the server device 402 easily determines whether or not the date recorded on the optical disc medium 100 needs updating.

The encryption unit 918 encrypts the updated image file using the device identification information (S1021). The image file transmission unit 906 then transmits the encrypted image file to the server device 402 (S1022).

As described above, the terminal device 405 according to Embodiment 1 reads device identification information or medium identification information from a data recording medium using a reader-writer, and transmits the read device identification information or the medium identification information to the server device 402. The terminal device 405 therefore receives an image file corresponding to the data recording medium and reproduces or records data using the received image file. In other words, even without a drive device to reproduce data recorded in a recording part of a data recording medium or to record data in a recording part of a data recording medium, the terminal device 405 may perform a process similar to a process of reproducing data recorded in a recording part of a data recording medium or recording data in a recording part of a data recording medium.

The shape of the proximity wireless communication antenna 105 may be similar to the shape of the optical disc medium 100. For example, when data is recorded in the recording part 101 of the optical disc medium 100 or data therein is reproduced, the loading orientation of the optical disc medium 100 loaded in the optical disc apparatus, that is, the angle to circumferential orientation is not limited because the optical disc medium is disciform and rotates. The shape of the proximity wireless communication antenna 105 is therefore preferably the same as the shape of the optical disc medium 100 (circular for this case) so that wireless communication can be stable regardless of the loading orientation of the optical disc medium 100.

The proximity wireless communication antenna 105 and the IC memory 106 may be provided in the clamping area 107. For example, this is achieved by providing the clamping area 107 with a structure of a combination of at least two media formed to include a space which encloses the proximity wireless communication antenna 105 and the IC memory 106. This structure prevents the proximity wireless communication antenna 105 and the IC memory 106 from being exposed to air outside the medium, so that the proximity wireless communication antenna 105 and the IC memory 106 are unlikely to be damaged or wet by liquid such as water. As a result, data is more securely stored the IC memory 106, and deterioration or loss of communication function is avoided.

The proximity wireless communication antenna 105 in the clamping area 107 may be placed near the outer circumference of the clamping area 107. This expands the coverage for a communication wave, thereby allowing efficient external communication.

The position of proximity wireless communication antenna 105 is not limited to the clamping area 107 and may be placed in other areas. For example, the proximity wireless communication antenna 105 may be placed in the outmost area of an optical disc medium. This further expands the coverage for a communication wave, thereby allowing efficient external communication.

Furthermore, the position of the proximity wireless communication antenna 105 may be changed to suit the type of a terminal device to have proximity wireless communication with.

In the case where the optical disc apparatus records or reproduces data by irradiating the user data area 104 of the optical disc medium 100 with a laser beam, the proximity wireless communication antenna 105 may be provided in a further part than the user data area 104 from the irradiation side of the laser beam. This prevents the proximity wireless communication antenna 105 from being affected by operation of data recording or data reproduction in the user data area 104, and expands the area in which the proximity wireless communication antenna 105 may be provided. The proximity wireless communication antenna 105 may be used as a reflective layer of the optical disc medium 100.

Note that the area in which the proximity wireless communication antenna 105 is provided is preferably made of an insulative medium in order to prevent attenuation of the communication wave.

The IC memory 106 may have a function of close-contact communication. With this function, the IC memory may communicate with a terminal device having a function of contact communication even in an environment where propagation of a communication wave for wireless communication is poor due to disturbance such as noise.

In the case where the IC indicator 202 indicates that the IC memory 106 is not present, information of the device ID 205 is preferably invalid data (for example, dummy data, or data filled with zero). This prevents conflict between the information of the device ID 205 of an optical disc including no IC memory 106 and the information of the device ID 205 of an optical disc including an IC memory 106.

The determination as to whether or not the image file is updatable needs not be depending only on the type of the medium type information. For example, an image file of a read-only medium may be updated. For example, for an image file has content such as a movie, adding or updating information (for example, bonus movies, multilingual subtitles, up-to-date trailers) through the Internet will increase usability.

In this case, a message may be given to the user to inform that such additional information cannot be stored in the data recording medium.

Alternatively, the updated image file may be moved to a write-once medium.

In order to determine medium type information, not only types of medium but also data recorded on the medium may be also used. For example, an image file corresponding to a write-once medium may be set to not updatable when data on the medium is protected. An image file corresponding to a rewritable medium or a write-once medium may be treated in the same manner as a read-only medium and set to not updatable when the medium has been finalized. An image file corresponding to a write-once medium may be set to not updatable when the medium has no free space for data to be recorded.

An image file may be transmitted or received not as it is but compressed data thereof may be transmitted instead. When an image file is received as compressed data, it is reproduced after being expanded. When an image file is transmitted, it is compressed beforehand. This will reduce time to be taken by communication with the server device.

The updated image file may be transmitted to and received from the server device upon each updating, every predetermined time, or after an operation on the terminal device.

If such transmission and reception with the server device is performed in the background of a user's operation, the user will have no feeling of being kept waiting for the completion of the transmission or reception, and therefore have no stress.

Determination as to whether or not an image file has been updated may be made on the basis of the update indication information. Only an image file with update indication information which differs from that of the stored data is determined to be an updated image file and transmitted to the server device.

The personal information of a user may be not only an access account to the server device 402 but also biological information of the user. The biological information may be data of a fingerprint, an iris, a vein pattern, or a voiceprint. Such information is verified by the server device 402 or the terminal device 405. The terminal device 405 is therefore provided with a scanning unit for sensing fingerprints, irises, or vein patterns of users, or microphones for sensing voiceprints.

In the case where the server device 402 authenticates a user, the terminal device 405 transmits the user code 308 included in the IC memory 106 and the sensed biological information to the server device 402 so that the server device 402 attempts authentication of the user. The server device 402 transmits content data to the terminal device 405 only when the server device 402 authenticates the user as the same person.

Similarly, in the case where the terminal device 405 authenticates a user, the terminal device 405 requests the server device 402 for content data only when the user is authenticated as a result of comparison between the user code 308 included in the IC memory 106 and the sensed biological information.

In both cases described above, only a user who has registered their own biological information in the IC memory 106 of the optical disc is permitted to access the content data recorded on the server device 402, and a third person who obtains the optical disc medium 100 by any possibility cannot improperly use the content. Copyrights of digital works recorded on the optical disc are thus protected and risks of leakage of recorded information to third persons are reduced.

For registration of biological information, the server device 402 senses biological information of a user who generates an image file during the generating of the image file and registers the sensed biological information in the IC memory106. In this case, the server device 402 also has a means for sensing biological information as well as a means for accessing the IC memory 106.

An image file is more securely managed by using an encryption key generated from sensed biological information when the server device 402 generates the image file.

### (Embodiment 2)

In Embodiment 2, an image file generating method is described which is performed by a server device including a proximity wireless communication unit, such as an IC tag reader-writer, and an optical disc drive, and a terminal device including a proximity wireless communication unit. Embodiment 2 is different from Embodiment 1 in that a server device has a proximity wireless communication unit which is a means for accessing an IC memory.

Furthermore, a rewritable area 303 of an IC memory 106 of an optical disc medium 100 according to Embodiment 2 further stores update indication information.

Hereinafter, Embodiment 2 is described with a focus on the differences from Embodiment 1 with reference to the drawings.

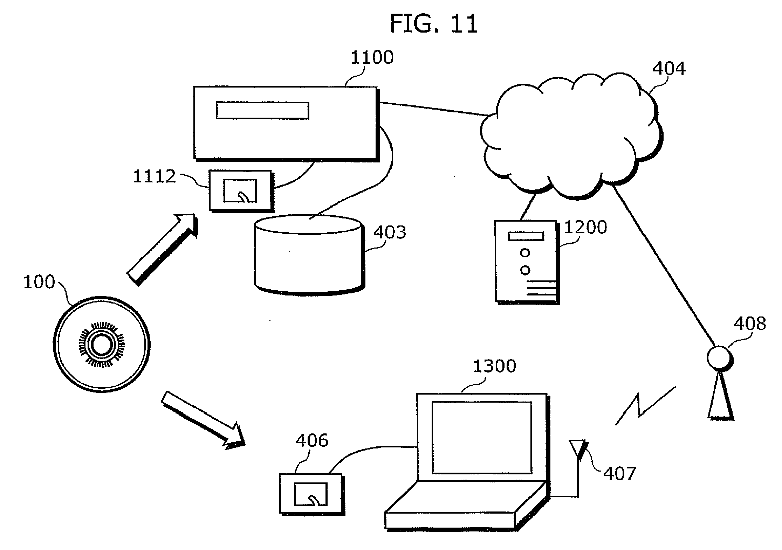

Fig. 11 is a schematic view of a system which uses the data recording medium according to Embodiment 2 of the present invention. In Fig. 11, components similar to those shown in Fig. 4 are denoted with the same reference signs and a description thereof is omitted.

The system according to Embodiment 2 includes a server device 1000, a second server device 1200, and a terminal device 1300. The server device 1100, the second server device 1200, and the terminal device 1300 are connected to each other through a wide-area network 404.

The server device 1100 includes a proximity wireless communication unit 1112 in addition to an image file storage unit 403.

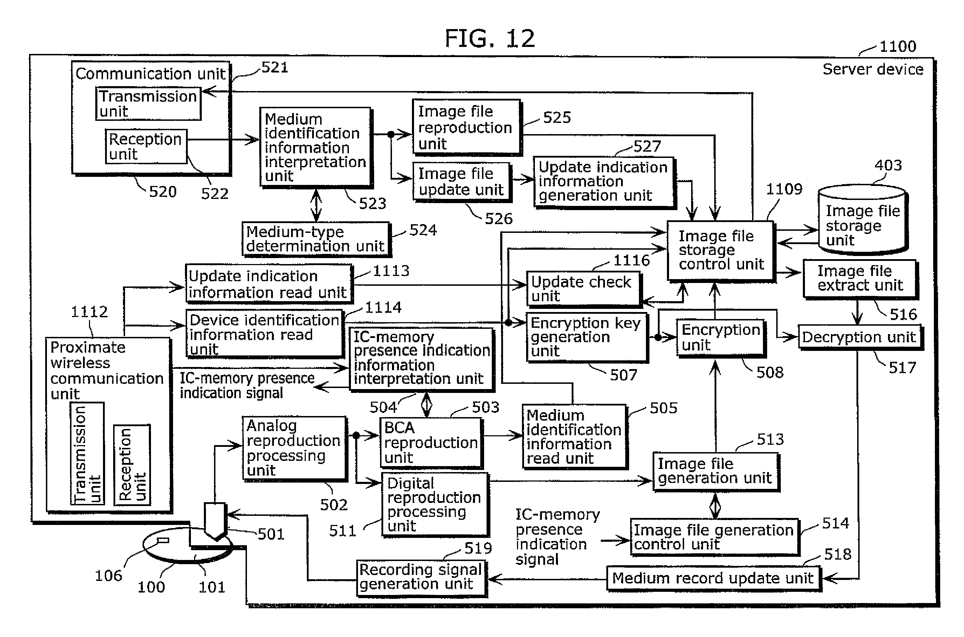

Fig. 12 is a block diagram showing a characteristic configuration of a server device according to Embodiment 2 of the present invention. In Fig. 12, components similar to those shown in Fig. 5 are denoted with the same reference signs and a description thereof is omitted.

As shown in Fig. 12, the server device 1100 includes an image file storage unit 403, an optical head 501, an analog reproduction processing unit 502, a BCA reproduction unit 503, an IC-memory presence indication information interpretation unit 504, a medium identification information read unit 505, an encryption key generation unit 507, an encryption unit 508, a digital reproduction processing unit 511, an image file generation unit 513, an image file generation control unit 514, an image file extract unit 516, a decryption unit 517, a medium record update unit 518, a recording signal generation unit 519, a communication unit 520, a medium identification information interpretation unit 523, a medium-type determination unit 524, an image file reproduction unit 525, an image file update unit 526, an update indication information generation unit 527, an image file storage control unit 1109, an update indication information read unit 1113, a device identification information read unit 1114, an update check unit 1116, and a proximity wireless communication unit 1112.

The image file storage control unit 1109 compares medium identification information read from the IC memory 106 by the device identification information read unit 1114 and medium identification information read from the recording part 101 by the medium identification information read unit 505. The image file storage control unit 1109 causes the image file generation unit 513 to generate an image file only in the case where medium identification information read from the IC memory 106 and the medium identification information read from the recording part 101 are identical. In the case where medium identification information read from the IC memory 106 and the medium identification information read from the recording part 101 are not identical, the image file storage control unit 1109 outputs error information on a display unit, which is not shown in the drawing, not causing the image file generation unit 513 to generate an image file.

Next, the update indication information read unit 1113 reads update indication information from the IC memory 106 through the proximity wireless communication unit 1112.

The device identification information read unit 1114 reads medium identification information and device identification information from the IC memory 106 through the proximity wireless communication unit 1112.

The update check unit 1116 determines, based on the update indication information read by the update indication information read unit 1113, whether or not the image file has been updated.

The proximity wireless communication unit 1112 has a reception unit and a transmission unit to exchange data with the IC memory 106.

Hereinafter, operations in the server device 1100 configured as described above are described.

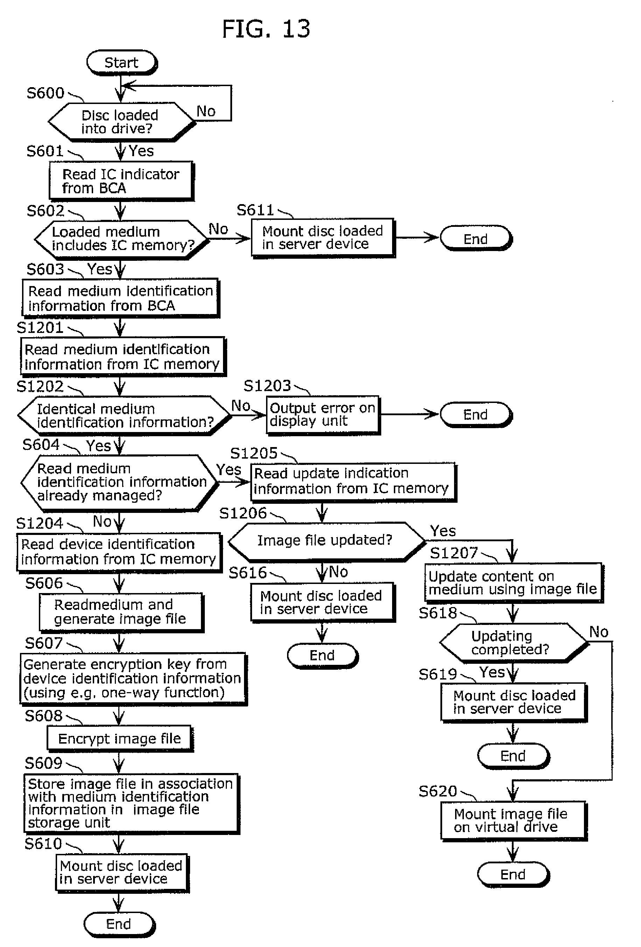

Fig. 13 is a flowchart showing a process flow of generation of an image file by a server device according to Embodiment 2 of the present invention. In Fig. 13, components similar to those shown in Fig. 7 are denoted with the same reference signs and a description thereof is omitted.

After the process from Steps S600 to S603 is performed, the device identification information read unit 1114 reads medium identification information recorded in the IC memory 106 through the proximity wireless communication unit 1112 (S1201).

The image file storage control unit 1109 compares the medium identification information read in Step S603 and the medium identification information read in Step S1201 (S1202). In the case where they are not identical (No in S1202), the image file storage control unit 1109 outputs error information on a display unit (S1203), which is not shown in the drawings, and ends the process. For an authorized optical disc medium, they are identical because individual identification information of the IC memory is recorded in the BCA in the process of manufacturing the optical disc medium. Accordingly, if they are not identical, the loaded optical disc medium may be an unauthorized optical disc medium with high probability. The server device 100 therefore outputs error information and prevents generation of an image file of the optical disc.

On the other hand, in the case where the identification information read in Step S603 and the medium identification information read in Step S1201 are identical (Yes in S1202), the image file storage control unit 1109 thereafter determines whether or not the medium identification information is already managed in the image file storage unit 403 (S604).

In the case where the read medium identification information is not under the management (No in S604), the server device 1100 performs a process to additionally register the image file in the image file storage unit 403 to put the image file under the management (S1204, S606 to S610). Specifically, the device identification information read unit 1114 first reads the device identification information from the IC memory 106 through the proximity wireless communication unit 1112 (S1204). Next, the process from Steps S606 to S610 is performed. The process after the device identification information is read (S606 to S610) is the same as the process shown in Fig. 7, and thus a description thereof is omitted.

On the other hand, in the case where the read medium identification information is under the management (Yes in S604), the update indication information read unit 1113 reads the update indication information from the IC memory 106 through the proximity wireless communication unit 111 (S1205). The update check unit 119 then determines, based on the read update indication information, whether or not the stored image file has been updated (S1206). In the case where the stored image file has not been updated (No in S1206), the server device 1100 mounts the loaded optical disc medium 100 (S616) and ends the process.

On the other hand, in the case where the image file has been updated (Yes in S1206), the server device 1100 updates content recorded on the optical disc medium loaded in the server device 1100 (S1207).

Specifically, the server device 1100 updates content data recorded on the optical disc medium 100 through the process below.

First, the image file storage control unit 1109 transmits, to the second server device 1200 via the transmission unit 521, a signal to request for the updated image file to be recorded on the optical disc medium 100 loaded in the server device 1100. The reception unit 522 then receives the updated image file from the second server device 1200 and forwards the received update image file to the medium identification information interpretation unit 523. The medium-type determination unit 524 determines whether or not the image file corresponds to a medium which the server device 1100 can handle (for example, a predetermined write-once optical disc medium), or whether or not changing the image file is permitted. In the case where the medium-type determination unit 524 determines that changing the image file in the server device 1100 is allowed, the image file reproduction unit 525 outputs the updated image file to the image file storage control unit 1109.

At this time, the image file update unit 526 verifies that the image file has been updated. The update indication information generation unit 527 then generates update indication information and outputs the update indication information to the image file storage control unit 1109. The image file storage control unit 1109 determines whether or not the update indication information read by the update indication information read unit 1113 and the update indication information generated by the update indication information generation unit are identical. In the case where the update indication information read by the update indication information read unit 1113 and the update indication information generated by the update indication information generation unit are identical, the image file storage control unit 1109 outputs the updated image file to the image file extract unit 516.

The image file extract unit 516 provides the updated image file to the decryption unit 517. The decryption unit 517 decrypts the updated image file using an encryption key, which is the output signal from the encryption key generation unit 507. The medium record update unit 518 then generates digital data based on the image file decrypted by the decryption unit 517 and outputs the generated digital data to the recording signal generation unit 519. The recording signal generation unit 519 generates, based on the digital data, a recording signal to record the digital data on the optical disc medium 100. The recording signal generation unit 519 then outputs the generated recording signal to the optical head 501. The optical head 501 records or updates data in the recording part 101 of the optical disc medium 100 by controlling the irradiation level of the light beam according to the recording signal.

The process of Step S1207 is performed as describe above. Next, the process from Steps S618 to S620 is performed and the process is completed. The process from Steps S618 to S620 is the same as the process shown in Fig. 7, and thus a description thereof is omitted.

In Step 602, the IC-memory presence indication information interpretation unit 504 may determine whether or not the optical disc medium 100 includes the IC memory 106 based on accessibility to the IC memory 106 through the proximity wireless communication unit 1112. In this case, the IC-memory presence indication information interpretation unit preferably determines that the optical disc medium does not includes the IC memory 106 when the determination based on the IC indicator recorded in the recording part 101 and the determination based on the accessibility to the IC memory 106 contradict each other.

With this, the server device prevents copying of content data when an improper IC memory is included in an optical medium which originally includes no IC memory, thereby increasing security. Furthermore, the server device prevents copying of content data also when an IC identifier recorded on an optical medium which originally includes no IC memory is fraudulently changed, thereby increasing security.

Hereinafter, a method of updating an image file by the terminal device 1300 including the proximity wireless communication unit is described.

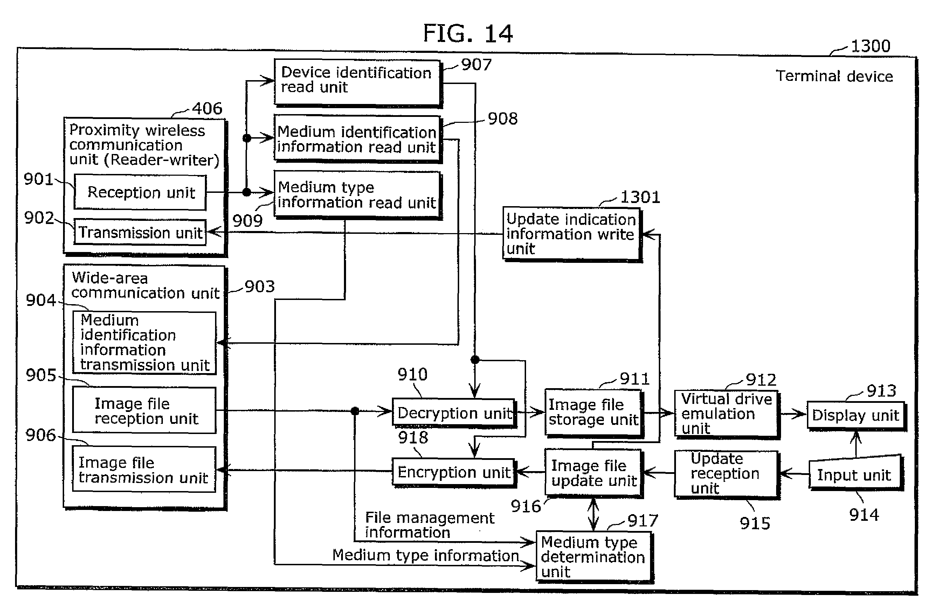

Fig. 14 is a block diagram showing a characteristic configuration of a terminal device according to Embodiment 2 of the present invention. In Fig. 14, components similar to those shown in Fig. 9 are denoted with the same reference signs and a description thereof is omitted.

As shown in Fig. 14, the terminal device 1300 includes an update indication information write unit 1301 in addition to the components which the terminal device 405 according to Embodiment 1 includes.

The update indication information write unit 1301 writes update indication information in the IC memory 106 through the proximity wireless communication unit 406.

Hereinafter, operations in the terminal device 1300 configured as described above are described.

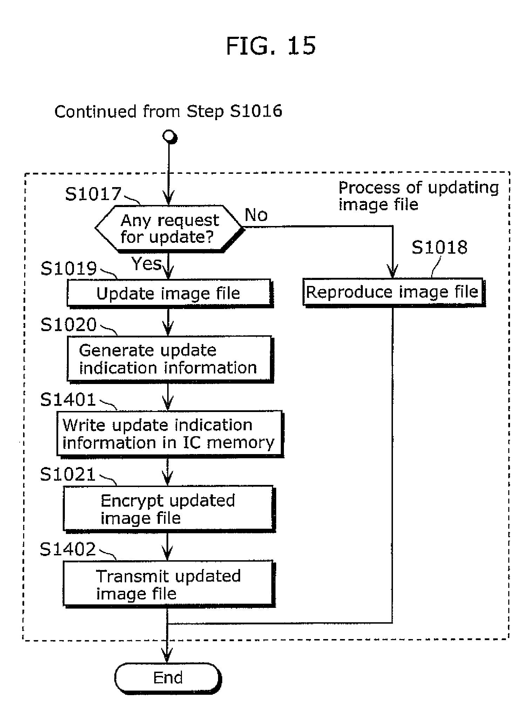

Fig. 15 is a flowchart showing a process flow of update of an image file by the terminal device according to Embodiment 2 of the present invention. Processes other than the process of updating an image file are the same as those shown in Fig. 10, and thus a description thereof is omitted.

After the image file update unit 916 generates update indication information (S1020), the update indication information write unit 1301 writes the update indication information in the IC memory 106 through the proximity wireless communication unit 406 (S1401). Next, the encryption unit 918 encrypts updated image file using the device identification information indicated by an output signal from the device identification information read unit 907. The image file transmission unit 906 then transmits the encrypted image file to the second server device 1200 (S1402).

As described above, after updating the image file, the terminal device 1300 according to Embodiment 2 transmits the updated image file to the second server device 1200 and records the update indication information in the IC memory included in the data recording medium. With this, even when the terminal device 1300 lacks a means for reproducing the data recorded in the recording part of the data recording medium, the terminal device 1300 obtains the information recorded in the IC memory of the data recording medium, thereby reproducing the updated image file.

### (Embodiment 3)

Next, Embodiment 3 of the present invention is described below with reference to the drawings.

Hereinafter, Managed Copy, which is authorized by a standard for copyright protection of media such as Blu-ray discs, the AACS, is described.

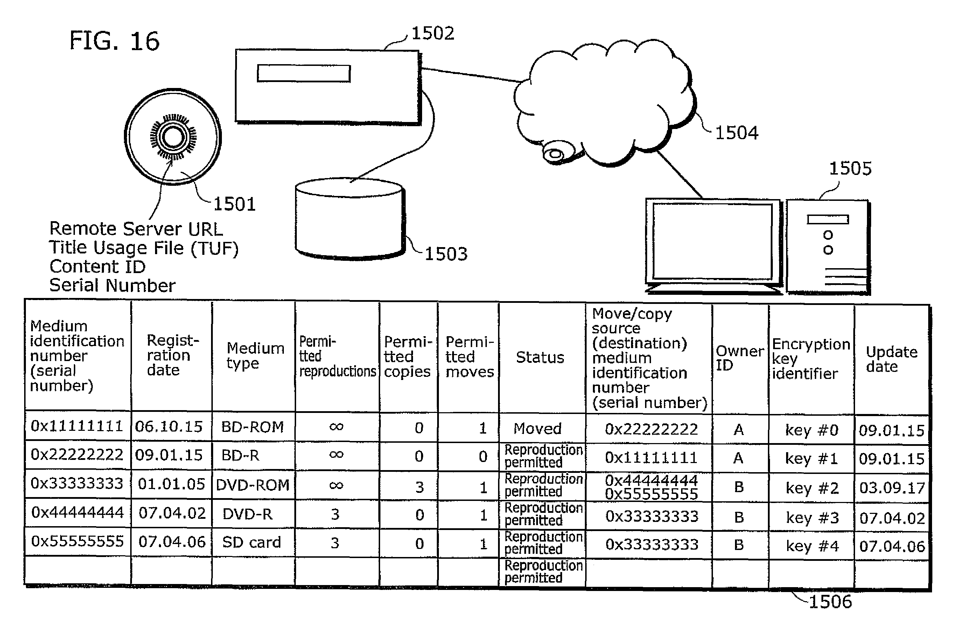

Fig. 16 shows the Managed Copy authorized by a standard for copyright protection of media such as Blu-ray discs, the AACS.

Managed Copy is a system where users are provided with additional services using a specified networked reproducing device with authentication by a management server (Remote Server) connected through the network.

The additional services are assumed to include copying or moving of content data from a ROM disc on which a movie title is recorded onto a home server, utilizing content data, which is not accessible from home, in a specific facility (for example, an amusement park), and viewing interviews with casts associated with the title.

In the user data area of an optical disc 1501, which is compatible with Managed Copy, encrypted content data is recorded. In the management information area of the optical disc 1501, a URL of the management server, a Title Usage File (TUF) which indicates conditions of use of each content item, a content ID which is identification information of the content item, and a serial number which identifies the disc. The serial number is usually recorded in the BCA of the optical disc as a barcode-shape mark provided by removing the reflective film so as not to be changed improperly.

Referring to Fig. 16, a case is described where content data is moved from the optical disc 1501 onto a hard disk 1503 of a home server 1502 including an optical disc drive to read optical discs.

Receiving a command from a user to move the content data to the hard disk, the home server 1502, into which the optical disc 1501 is loaded, reads from the disc management information area of the optical disc 1501 the URL of the management server 1501, a Title Usage File (TUF), a content ID, and a serial number. The home server 1502 also connects to the management server 1505 through the Internet 1504 according to the URL of the management server 1505. The home server 1502 also transmits the content ID, the TUF, and the serial number read from the optical disc 1501 to the management server 1505 as required by the management server 1505.

The management server 1505 authenticates the request for the move based on the content ID, the TUF, and the serial number transmitted from the home server 1502. In Fig. 16, the management server 1505 has a management database 1506 and determines, for each optical disc, whether or not a request can be authenticated based on the management database 1506.

Managed in the management database 1506 are serial numbers of optical discs of the request sources (the source of the move in Fig. 16), registration dates, types of media, numbers of permitted reproductions, numbers of permitted copies, numbers of permitted moves, statuses, serial numbers of move/copy destination media, owner IDs, encryption key identifiers, and update dates.

The Serial numbers are those of request sources. In Fig. 16, the serial number recorded on the optical disc 1501 is one of them.

The registration dates are information on dates on which the serial numbers are registered.

The types of media are information which indicates types of data recording media of the request sources and usually provided as part of the TUF. In Fig. 16, as the optical disc 1501 is assumed to be a Blu-ray ROM, the registered type of the medium is "BD-ROM".

The numbers of permitted reproductions, the numbers of permitted copies, and the numbers of permitted moves are information obtained from the TUF. They are set by copyright owners of respective content items and managed as information items of TUF. Therefore, when the number is zero, request for the operation is not allowed.

The statuses indicate the statuses of respective content items in the data recording medium identified by the serial numbers. For example, the BD-ROM with the serial number of 0x11111111 has already been moved to another medium. In the case of this status, the content is not allowed to be copied, moved, or even read from the data recording medium.

The owner IDs indicate owners of respective data recording media associated with the serial IDs. The owner IDs may be registered by users. Alternatively, user IDs set in the home server 1502 beforehand may be managed.

The encryption key identifiers are identification information of encryption keys to be used for decryption of respective encrypted content items recorded on data recording media associated with the serial IDs. When reproduction of a content item is permitted according to the data base and the transmitted TUF, the management server 1505 transmits the encryption key identified by the encryption key identifier to the home server 1502. The home server 1502 is thus allowed to reproduce the content recorded on the optical disc 1501.

The update dates are information on dates on which respective items in the list of the management database 1506 are updated.

In the example shown in Fig. 16, the content on the BD-ROM with the serial number of 0x11111111 has been moved to the BD-R with the serial number of 0x22222222. Upon a request for a reproduction of the content associated with the serial number of 0x11111111, the management server 1505 does not transmit the encryption key because the content has been moved as indicated by the status, and thus reproduction of the content is not permitted.

On the other hand, as shown in Fig. 16, the content has been moved from the BD-ROM numbered 0x11111111 to the BD-R numbered 0x22222222. Upon a request for a reproduction of the content associated with the serial number of 0x22222222, the management server 1505 transmits the encryption key of key#1 identified by the encryption key identifier to the home server 1502. The home server 1502 is thus allowed to decrypt and reproduce the encrypted content recorded on the BD-R.

As shown in Fig. 16, key information for encryption is changed when the content is moved from the medium numbered 0x11111111 to the medium numbered 0x22222222. Specifically, when the management server 1505 permits the move upon the request for a move from the medium numbered 0x11111111, the management server 1505 delivers not only the encryption key of Key#0 to the BD-ROM but also the encryption key of Key#1. The home server 1502 once decrypts the encrypted content read from the BD-ROM using the key of Key#0, and then encrypts the content using Key#1 to record it on the BD-R. This protects the content data against misuse of disguising the BD-ROM numbered 0x11111111 from which the content data has been moved as the BD-R to which the content data has moved.

The Managed Copy is not limited to the description in which moving of content is used as an example with reference to Fig. 16. The Managed Copy is applicable to controlling not only copy and reproduction but also managing counts thereof or periods or times during which the content is available. In addition, with information on the location of the home server 1502 provided from the home server 1502, the Managed Copy is applicable to controlling venues from which the content is accessible. In the case where a TUF or a database is provided with reproduction management information on additional data, the Manage Copy is applicable also to provision and management of additional data such as extra movies.

Hereinafter, a case where the Managed Copy is applied to the present invention is described.

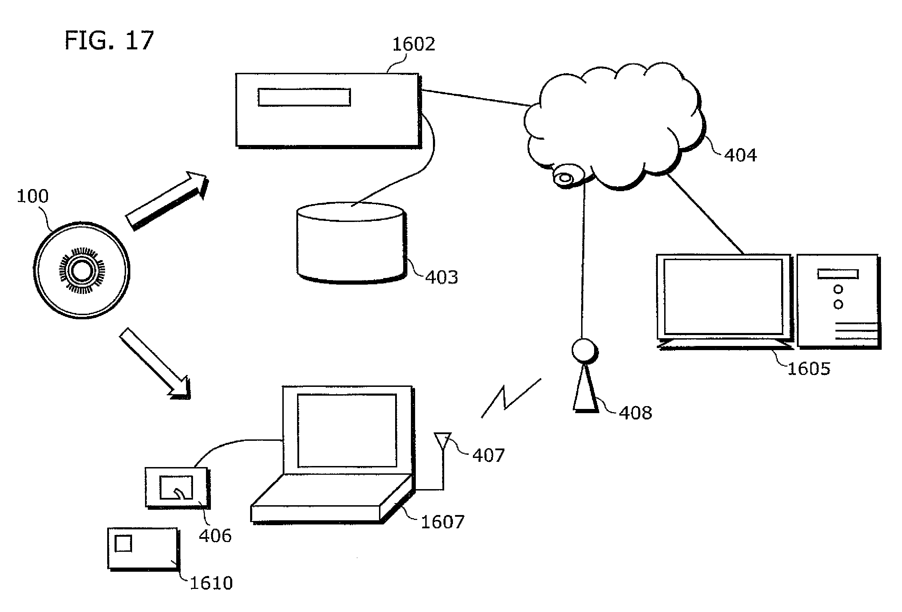

Fig. 17 is a schematic view of the system according to Embodiment 3 of the present invention.

The system includes a server device 1602, a management server 1605, and a terminal device 1607.

In addition to the information shown in Fig. 2, the URL of the management server 1605, a TUF, and a content ID are recorded in the BCA of the optical disc medium 100.

The server device 1602 has an optical disc drive. When the optical disc medium 100 is loaded into the optical disc drive, the server device 1602 reads a medium ID (serial number) from the BCA as described in Embodiment 1. When the read medium ID is not registered in the image file storage unit 403, the server device 1602 reads content recorded on the optical disc medium 100 and creates an image file. The server device 1602 then registers the created image file in the image file storage unit 403 in association with the read medium ID. The image file includes the TUF, the content ID, the URL information of the management server recorded in the management information area of the optical disc medium 100.

Similarly, when the copied content data, which is a copy of the content data, is not an image file, the image file storage unit 403 stores the copied content data, which is a copy of the content data recorded on the optical disc medium 100, the TUF, the content ID, and the URL of the management server, in association with the medium ID.

In Embodiment 3, a case where a right for use of the content data recorded on the optical disc medium 100 is moved to a card-type medium as in the description with reference to Fig. 16.

The terminal device 1607 includes the proximity wireless communication unit 406 to be used for accessing the IC memory 106 through proximity wireless communication.

First, the optical disc medium 100 onto which data to be moved is recorded is approximated to the proximity wireless communication unit 406 of the terminal device 1607. The terminal device 1607 therefore reads the medium identification information (a media ID, a serial number) recorded in the IC memory 106 of the optical disc medium 100. The terminal device 1607 receives a request from the user of the terminal device 1607 for a reproduction of the content or for a move or a copy of the content data.

When the terminal device 1607 receives a request from the user for a move, the terminal device 1067 transmits, to the server device 1602, the medium identification information read from the IC memory 106 of the optical disc medium 100 through the proximity wireless communication unit 406, and requests an image file corresponding to the medium identification information.

The server device 1602 reads, from the image file storage unit 403, an image file associated with the received medium identification information and transmits the image file to the terminal device 1607.

The terminal device 1607 expands the received image file using a drive emulator (virtual drive emulation unit) and mount it, and then reads the management server URL, the content ID, and the TUF included in the image file.

Next, the terminal device 1607 connects to the management server according to the read URL of the management server 1605, and make a request for a move in order to move the content data from the optical disc medium 100.

The management server 1605 determines whether or not the move can be permitted, based on the management database 1506 in the management server 1605 with reference to the received TUF, the content ID, and the medium identification information (serial number). The management server 1605 then sends a request to the management server 1605 for a serial number of a medium to be the destination of the move only when the move can be permitted.

Upon receiving the request for the serial number of the medium to be the destination of the move, the terminal device 1607 reads, through the proximity wireless communication unit 406, a serial number (or a device ID) stored in an IC memory of the card-type medium 1610 to which the right for use of the content data is moved, and transmits the serial number to the management server 1605.

When the move is permitted, the management server 1605 registers the status of the optical disc medium 100 as moved and the serial number of the card-type medium 1610 as the destination, and then issues an encryption key for the card-type medium 1610.

The terminal device 1607 encrypts the content of the image file using the issued encryption key, transmits the encrypted content to the server device 1602, and registers the encrypted content in the image file storage unit 403 of the server device 1602.

As described above, application of the present invention to the Managed Copy allows a move of right for use by virtually moving or copying content from a data recording medium which has a large recording area where the content is recorded, such as a optical disc medium or a semiconductor memory, to a data recording medium which does not have a large recording area, such as a card-type medium. In this case, the content data is not actually moved from the optical disc medium to the card-type medium, but the same effect is achieved by updating the association of the image file stored in the image file storage unit of the home server with medium identification information to associate the image file with the medium identification information of the card-type medium. The management server for the Managed Copy performs only the same processing as that to be performed for a move between recording media, and thus no update of the server system is necessary.

In addition, the present invention is not limited to the above described embodiment in which the medium identification information is recorded in the IC memory of the card-type medium. The same effect may be achieved in an embodiment in which a management server or a home server issues medium identification information for a card-type medium to be a destination of a move, a terminal device records the issued medium identification information in the IC memory of the card-type medium, and a server device manages an image file in association with the issued medium identification information.

In Embodiment 1, an optical disc medium on which content data is recorded is directly used from a terminal device. In Embodiment 3, contrastingly, content is virtually moved to a card-type medium which is superior to data recording media in portability, resulting in enhancement of convenience for users.

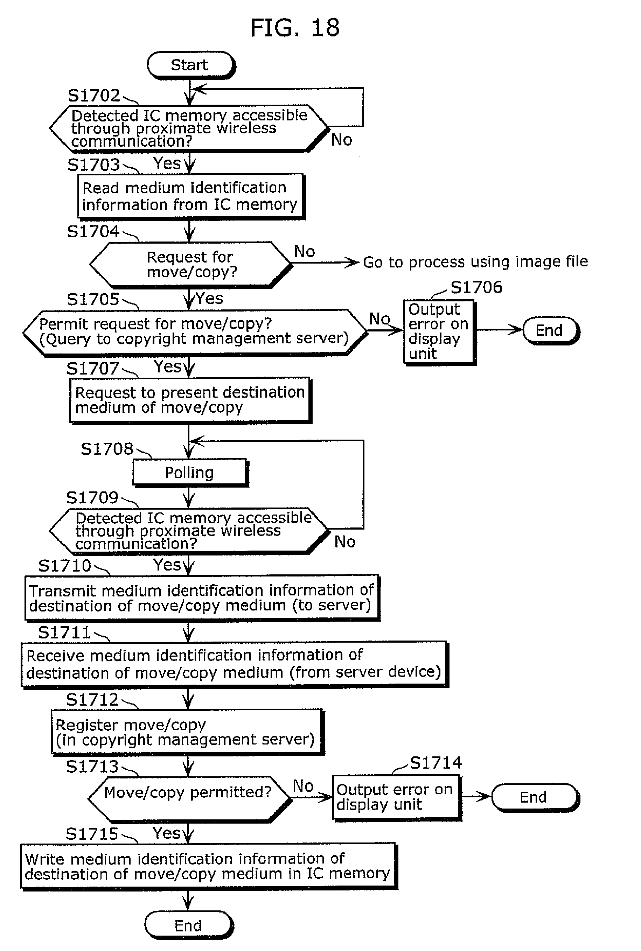

Fig. 18 is a flowchart showing a process flow of operations by the terminal device according to Embodiment 3 of the present invention. Specifically, Fig. 18 is a flowchart showing operations by the terminal device 1607 when the terminal device 1607 virtually moves content to a card-type medium.

First, the proximity wireless communication unit 406 determines whether or not an IC memory capable of proximity wireless communication has been detected by polling to find a medium to be read (S1702). In the case where no IC memory capable of proximity wireless communication is detected (No in S1702), the terminal device 405 continues the polling.

On the other hand, in the case where an IC memory capable of proximity wireless communication is detected (Yes in S1702), the proximity wireless communication unit 406 establishes a proximity wireless communication channel to the IC memory 106 and reads medium identification information from the IC memory 106 of the optical disc medium 100 (S1703).

Next, the terminal device 1607 determines whether or not there is a request from a user of the terminal device 1607 for a copy or a move (S1704). In the case where there is no request from the user for a copy or a move (No in S1704), the process for using an image files is performed as described in Embodiment 1.

On the other hand, in the case where there is a request from the user for a move or a copy (Yes in S1704), the terminal device 1607 determines whether or not the requested move or copy from the medium may be permitted (S1704). Specifically, the terminal device 1607 queries the management server 1605 as to whether the move or the copy is permitted to determine whether or not the move or the copy is permitted. More specifically, the terminal device 1607 receives an image file from the server device1602 based on the medium identification information read from the IC memory, reads a content ID, a TUF, and a management server URL included in the received image file, and connects to the management server 1605 according to the read management server URL, and queries as to whether or not the move or the copy is permitted.

In the case where the move or the copy is determined not to be permitted (No in S1705), the terminal device 1607 indicates, on the display unit of the terminal device1607, as an error that the move or the copy is not permitted (S1706), and ends the process.

On the other hand, in the case where the move or the copy is determined to be permitted (Yes), the terminal device 1607 requests presentation of the destination of the move or the copy (S1707).

Next, the terminal device 1607 performs polling to have proximity wireless communication with the medium to be the destination of the move or the copy (S1607).

Next, the terminal device 1607 determines whether or not an IC memory capable of proximity wireless communication has been detected by the polling (S1709). In the case where it has not been detected (No in S1709), the terminal device 1607 continues the polling.

On the other hand, in the case where it has been detected (Yes in S1709), the terminal device 1607 transmits medium identification information of the source of the move or the copy to the server device 1602 (S1710).

Next, the terminal device 1607 receives medium identification information of the destination of the move or the copy from the server device 1602. The medium identification information has been generated by the server device 1602 (S1711).

Next, the terminal device 1607 registers the move or the copy in the management server 1605 with the medium identification information of the source, the medium identification information of the destination, the TUF, and the content ID (S1712). The method of the registering is described in detail in the description of Fig. 16, and thus the description there of is omitted here.

Next, the terminal device 1607 determines whether or not the management server 1605 permits the move or the copy (S1713).

In the case where the move or the copy is not permitted (No in S1713), the terminal device 1607 displays an error message indicating that on the display unit and ends the process (S1714).

On the other hand, in the case where the move or the copy is permitted (Yes in S1713), the medium identification information generated by the server device 1602 is written in the IC memory of the card-type medium 1610, which is the destination of the move or the target, through proximity wireless communication using the proximity wireless communication unit 406.

The above described procedure allows the terminal device 1607 to access, through a network, the image file which has content data equivalent to that recorded on an optical disc medium having a large recording area. The terminal device 1607 is then allowed to access the image file using a card-type medium which does not have a large volume memory. Specifically, since the content data recorded on the optical disc medium is virtually moved to the card-type medium, the user can mount and access the image file on the terminal device by touching the card-type medium to a reader-writer of the terminal device more conveniently. In addition, mobile phones and light-weight, small notebook PCs usually have no optical disc drive. Even such terminal devices are provided with an environment in which an optical disc medium is loaded into an optical disc drive and mounted on the terminal devices by touching a card-type medium to a reader-writer. In other words, content data recorded on optical disc media, which cannot be accessed on terminal devices without optical disc drives, is available on such terminal devices for virtual reproduction or edit in Embodiment 3.

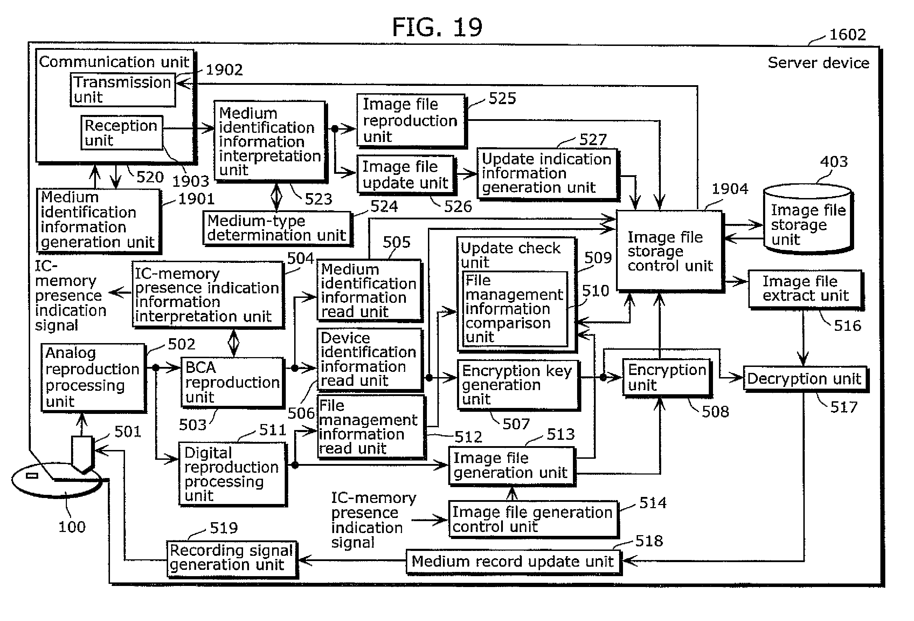

Fig. 19 is a block diagram showing a characteristic configuration of a server device according to Embodiment 3 of the present invention. In Fig. 19, components similar to those shown in Fig. 5 are denoted with the same reference signs and a description thereof is omitted.

As shown in Fig. 19, the server device 1602 includes a medium identification information generation unit 1901 in addition to the components included in the server device 402 according to Embodiment 1. The server device 1602 further includes a transmission unit 1902, a reception unit 1903, or an image file storage control unit 1904 each of which has an additional function in addition to the functions of the transmission unit 521, the reception unit 522, or the image file storage control unit 515, respectively, included in the server device 402 according to Embodiment 1.

The medium identification information generation unit 1901 generates new medium identification information. Specifically, the medium identification information generation unit 1901 generates new medium identification information upon receiving a request for a reproduction or a copy of content data from the terminal device 1607.

The transmission unit 1902 transmits the new medium identification information generated by the medium identification information generation unit 1901 to the terminal device 1607.

The reception unit 1903 receives the medium identification information from the terminal device 1607 connected through a communication network.

The image file storage control unit 1904 newly associates, with the new medium identification information generated by the medium identification information generation unit 1901, the image file stored in the image file storage unit 403 in association with the medium identification information received by the reception unit 1903.

Hereinafter, operations in the server device 1620 configured as described above is described.

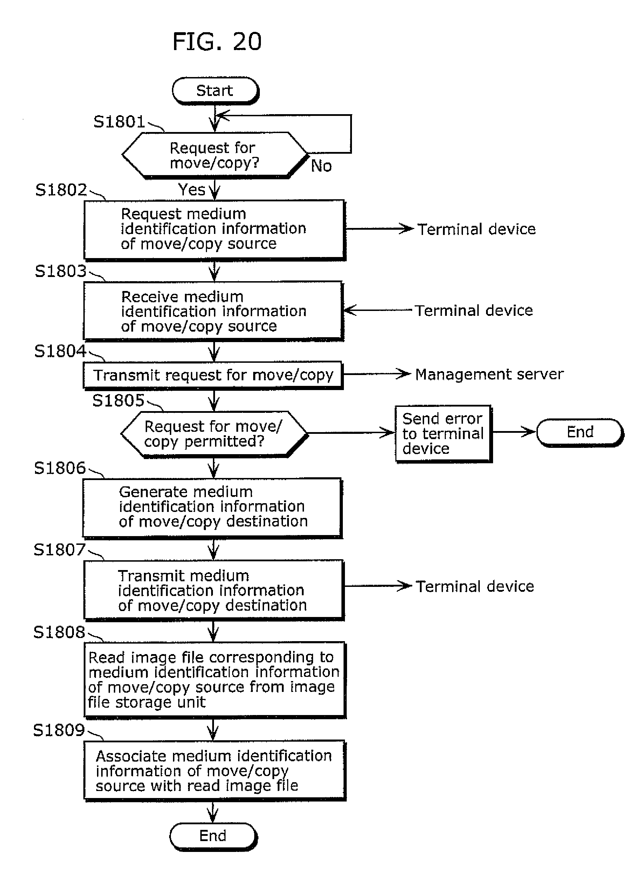

Fig. 20 is a flowchart showing a process flow the server device according to Embodiment 3 of the present invention.

First, the server device 1602 determines whether or not there is a request from the terminal device 1607 for a copy or a move of content data (S1801). In the case where there is not such a request (No in S1801), the server device 1602 repeats the determination as to whether or not there is a request for a copy or a move of content data.

On the other hand, in the case where there is such a request (Yes in S1801), the server device 1602 sends a request to the terminal device 1607 for medium identification information of the source of the move or the copy (S1802).

Next, the reception unit 1903 receives, from the terminal device 1607, the medium identification information of the source of the move or the copy (S1803).

The image file storage control unit 1904 reads, from the image file storage unit 403, an image file corresponding to the received medium identification information of the source of the move or the copy. Next, the image file storage control unit 1904 reads a TUF, a management server URL, and a content ID from the read image file. The image file storage control unit 1904 then connects to the management server 1605 according to the read management server URL, and transmits, to the management server 1605, the medium identification information, the TUF, and the content ID received from the terminal device 1607 as a request for the move or the copy (S1804).

The medium identification information generation unit 1901 determines whether or not the request for the move or the copy transmitted to the management server 1605 is permitted by the management server 1605 (S1805).

Here, in the case where the requested move or copy is not permitted (No in S1805), the transmission unit 1902 informs the terminal device 1607 of the error that the requested move or copy is not permitted (S1810), and ends the process.

On the other hand, in the case where the requested move or copy is permitted (Yes in S1805), the medium identification information generation unit 1901 generates medium identification information of the destination of the move or the copy (new medium identification information) (S1806). The medium identification information generation unit 1901 may generate the new medium identification information according to a series of random numbers or may receive medium identification information generated by the management server 1605. The medium identification information generation unit 1901 may generate new medium identification information in association with medium identification information of the source of the move or the copy. For example, the medium identification information generation unit 1901 may generate new medium identification information in association with medium identification information of the source of the move or the copy by adding child-identification information to the medium identification information of the source of the move or the copy (parent-identification information). This allows the management server 1505 and the like to determine containment relationship between media only based on medium identification information, so that copyright can be easily managed.

The transmission unit 1902 transmits the generated medium identification information of the target of the move or the copy to the terminal device 1607 (S1807).

The image file storage control unit 1904 reads, from the image file storage unit 403, an image file corresponding to the received medium identification information of the source of the move or the copy (S1808).

Finally, the image file storage control unit 1904 registers the read image file in the image file storage unit 403 so that the image file is associated with the generated medium identification information of the move or the copy (S1809).

As described above, the server device 1602 according to Embodiment 3 is capable of virtually copying or moving content data from such a large capacity storage medium that whole content data can be stored therein, such as an optical disc medium or a semiconductor memory medium, to a card-type medium or the like in which the whole content data cannot be stored. In order to achieve this, the medium identification information generation unit 1602 generates new medium identification information for a card-type medium which does not have medium identification information. In addition, the server device 1602 transmits the newly generated medium identification information to the terminal device 1607. Receiving the transmitted medium identification information, the terminal device 1607 writes, in the IC memory of the card-type medium 1610, the medium identification information of the source medium of the move or the copy through non-contact wireless communication using a reader-writer. The server device 1602 associates, with the generated medium identification information of the target of the move or the copy, the image file stored in association with the received medium identification information of the source of the move or the copy. For example, in the case of a copy, the server device 1602 associates the image file stored in association with the medium identification information of the source of the move or the copy additionally with the medium identification information of the target of the move or the copy. In the case of a move, the server device 1602 changes the association of the stored image file with the medium identification information of the source of the move or the copy to association with the medium identification information of the target of the move or the copy.

Then, the content data can be accessed from the terminal device 1607 by holding the card-type medium to which the content data is virtually copied or moved on a reader-writer of the terminal device 1607. In other words, the server device 1602 reads an image file associated with medium identification information stored in the IC memory of the card-type medium read by the terminal device 1607 and transmits the image file to the terminal device, so that the content data recorded in the recording part of the optical disc medium can be reproduced or edited on the terminal device 1607 without an apparatus to reproduce or edit the content data.

The present invention is not limited to a data recording medium or a server device according to one embodiment of the present invention described above. Without departing from the spirit of the present invention, variations of the embodiments to be conceived by those skilled in the art or any embodiment configured by combining components in the embodiments above is within the scope of the present invention.

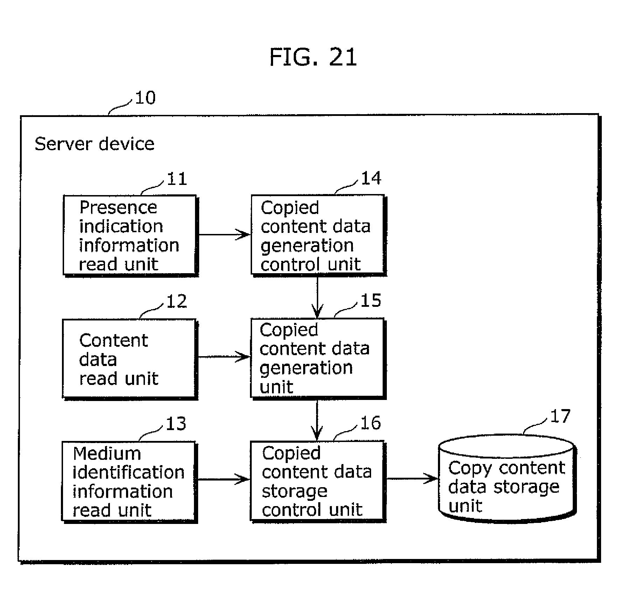

For example, not all of the many components included in the server device are necessary. The server device may be configured as shown in Fig. 21.

Fig. 21 is a block diagram showing a configuration of a server device according to a variation of the present invention. As shown in Fig. 21, the server device 10 includes a presence indication information read unit 11, a content data read unit 12, a medium identification information read unit 13, a copied content data generation control unit 14, a copied content data generation unit 15, a copied content data storage control unit 16, and a copied content data storage unit 17.

The presence indication information read unit 11 reads, from a recording part of a data recording medium, presence indication information, which indicates whether or not a data recording medium includes an IC memory which is accessible through proximity wireless communication.

The content data read unit 12 reads content data from the recording part of the data recording medium.

The medium identification information read unit 13 reads medium identification information from the recording part of the data recording medium.

The copied content data generation control unit 14 causes the copied content data generation unit 15 to generate copied content data when the presence indication information indicates that the data recording medium includes such an IC memory. On the other hand, the copied content data generation control unit 14 does not cause the copied content data generation unit 15 to generate copied content data when the presence indication information indicates that the data recording medium does not include such an IC memory.

The copied content data unit 15 generates a copy of the read content data as copied content data. It is to be noted that the copied content data unit 15 does not necessarily generate an image file of a data recording medium as copied content data. For example, the copied content data unit 15 generates a mere copy of the read content data as copied content data.

The copied content data storage control unit 16 registers, in the copied content data storage unit 17, the generated copied content data in association with the read medium identification information.

The copied content data storage unit 17 is a storage unit which stores copied content data.

The above configuration enables the server device 10 to determine whether or not a data recording medium includes an IC memory by reading presence indication information from the recording part of the data recording medium even without a means for accessing an IC memory of the data recording medium. The server device 10 is therefore permitted to generate copied content data only when the data recording medium includes an IC memory. Furthermore, the server device 10 is therefore capable of managing a data recording medium and copied content data in an integrative manner by managing the copied content data in association with the medium identification information.

In addition, the data recording medium used in the server device shown in Fig. 21 includes a computer-readable recording part and an IC memory which is accessible through proximity wireless communication. The recording part includes a content recording area in which content data is recorded and a management information area in which information on management of recording or reproducing of content data is recorded. In the management information area, medium identification information which identifies the data recording medium and presence indication information which indicates whether or not the data recording medium includes an IC memory are recorded in a manner such that they does not allow changing.

With the above configuration, a data recording medium allows a server device even without a means for accessing an IC memory, to generate copied content data.

In addition, the data recording medium is not limited to the optical disc medium as described in Embodiments 1 to 3. For example, the data recording medium may be of any type of media which are detachable from a read-write unit and portable, such as a semiconductor memory, a magnetic tape medium, or a magnetic disc medium. Use of such data recording media produces the same effects as described in Embodiments 1 to 3.

The present invention may be implemented not only as a server device or a terminal device but also as a method of managing use of data recording media including operations of characteristic processing units of the server device or the terminal device as steps. Furthermore, the present invention may be implemented as a program which causes a computer including a central processing unit (CPU) or an integrated circuit (IC) to execute the steps included in the method of managing use of the data recording media. It should be understood that such a program can be distributed via a recording medium such as a CD-ROM or a transmission medium such as the Internet.

### [Industrial Applicability]

The present invention is applicable as a data recording medium which includes an IC memory capable of proximity wireless communication, and a server device using the data recording medium.

### [Reference Signs List]

- 10, 402, 1100, 1602: Server device
- 11: Presence indication information read unit
- 12: Content data read unit
- 13, 505, 908: Medium indication information read unit
- 14: Copied content data generation control unit
- 15: Copied content data generation unit
- 16: Copied content data storage control unit
- 17: Copied content data storage unit
- 100: Optical disc medium
- 101: Recording unit
- 102: Burst cutting area (BCA)
- 103: Disc management information area
- 104: User data area
- 105: Proximity wireless communication antenna
- 106: IC memory
- 107: Clamping area
- 201: Type indication information
- 202: IC indicator
- 203, 204: Preliminary information
- 205, 304: Device ID
- 206, 306: Medium ID
- 301: Non-rewritable area
- 302: Writable area
- 303: Rewritable area
- 305: Encryption key
- 307: Server address
- 308: User code
- 403, 911: Image file storage unit
- 404: Wide area network
- 405, 1300, 1607: Terminal device
- 406, 1112: Proximity wireless communication unit
- 407: Wireless LAN antenna
- 408: Access point
- 501: Optical head
- 502: Analog reproduction processing unit
- 503: BCA reproduction unit
- 504: IC-memory presence indication information interpretation unit
- 506, 907, 1114: Device identification information read unit
- 507: Encryption key generation unit
- 508, 918: Encryption unit
- 509,1116: Update check unit
- 510: File management information comparison unit
- 511: Analog reproduction processing unit
- 512: File management information read unit
- 513: Image file generation unit
- 514: Image file generation control unit
- 515, 1109, 1904: Image file storage control unit
- 516: Image file extract unit
- 517, 910: Decryption unit
- 518: Medium record update unit
- 519: Recording signal generation unit
- 520: Communication unit
- 521, 902, 1902: Transmission unit
- 522, 901, 1903: Reception unit
- 523: Medium identification information interpretation unit
- 524, 917: Medium-type determination unit
- 525: Image file reproduction unit
- 526, 916: Image file update unit
- 527: Update indication information generation unit
- 903: Wide-area communication unit
- 904: Medium identification information transmission unit
- 905: Image file reception unit
- 906: Image file transmission unit
- 909: Medium type information read unit
- 912: Virtual drive emulation unit
- 913: Display unit
- 914: Input unit
- 915: Update reception unit
- 1113: Update indication information read unit
- 1200: Second server device
- 1301: Update indication information read unit
- 1501: Optical disc
- 1502: Home server
- 1503: Hard disk drive
- 1504: Internet
- 1505, 1605: Management server
- 1506: Management database
- 1610: Card-type medium
- 1901: Medium identification information generation unit

## Claims

1. A data recording medium which is portable, comprising:
an IC memory accessible through proximity wireless communication; and
a recording part which is readable by a computer,
wherein said recording part includes:
a content recording area in which content data is recorded; and
a management information area in which management information on recording or reproducing of the content data is recorded,
in said management information area, medium identification information identifying the data recording medium, and presence indication information indicating that said data recording medium includes said IC memory are recorded in a manner such that the medium identification information and the presence indication information does not allow changing.

2. The data recording medium according to Claim 1,
wherein said IC memory includes a writable area in which identification information identical to the medium identification information recorded in said management information area is recorded.

3. The data recording medium according to Claim 1,
wherein said IC memory includes a non-rewritable area in which device identification information identifying said IC memory is recorded in a manner such that the device identification information does not allow changing, the device identification information being used for encryption of the content data when the content data is copied to an other data recording medium.

4. The data recording medium according to Claim 3, wherein, in said management information area, identification information identical to the device identification information recorded in said non-rewritable area of said IC memory is recorded in a manner such that the identification information does not allow changing.

5. The data recording medium according to Claim 1,
wherein the content data is copied to an other data recording medium, and said IC memory includes a rewritable area in which update indication information is recorded in a manner such that the update indication information allows changing, the update indication information indicating that copied content data recorded on the other data recording medium has been updated.

6. The data recording medium according to Claim 1,
wherein the content data is copied to an other data recording medium different from the data recording medium, and
said IC memory includes a rewritable area in which properties information is recorded in a manner such that properties information allows changing, the properties information indicating whether or not copied content data recorded on the other data recording medium is updatable.

7. A server device which allows use of a data recording medium being portable, including a recording part readable by a computer, and being loaded in said server device, said server device comprising:
a presence indication information read unit configured to read, from the recording part, presence indication information indicating whether or not the data recording medium includes an IC memory accessible through proximity wireless communication;
a medium identification information read unit configured to read, from the recording part, medium identification information identifying the data recording medium;
a content data read unit configured to read content data from the recording part;
a copied content data generation unit configured to generate a copy of the content data as copied content data;
a copied content data storage unit configured to store the copied content data;
a copied content data storage control unit configured to register, in said copied content data storage unit, the generated copied content data in association with the read medium identification information; and
a copied content data generation control unit configured to cause said copied content data generation unit to generate the copied content data when the presence indication information indicates that the data recording medium includes the IC memory, and not to cause said copied content data generation unit to generate the copied content data when the presence indication information indicates that the data recording medium does not include the IC memory.

8. The server device according to Claim 7,
wherein said copied content data generation unit is configured to generate, as the copied content data, an image file of data recorded in the recording part.

9. The server device according to Claim 7,
wherein, in the IC memory, device identification information identifying the IC memory is further recorded in a manner such that the device identification information does not allow changing,
said server device further comprises:
a device identification information read unit configured to read the device identification information from said IC memory; and
an encryption unit configured to encrypt the copied content data based on the device identification information, and
said copied content data storage control unit is configured to register the encrypted copied content data in said copied content data storage unit.

10. The server device according to Claim 7,
wherein, in the recording part, device identification information for identifying the IC memory is further recorded in a manner such that the device identification information does not allow changing,
said server device further comprises:
a device identification information read unit configured to read the device identification information from the recording part; and
an encryption unit configured to encrypt the copied content data based on the device identification information, and
said copied content data storage control unit is configured to register the encrypted copied content data in said copied content data storage unit.

11. The server device according to Claim 7, further comprising
a communication unit configured to receive the medium identification information of the data recording medium from a terminal device connected through a communication network, read, based on the received medium identification information, the copied content data stored in association with the medium identification information from the copied content data storage unit, and transmit the read copied content data to the terminal device.

12. The server device according to Claim 7, further comprising:
an update check unit configured to determine whether or not copied content data corresponding to the medium identification information read by said medium identification information read unit has been updated; and
a medium update unit configured to update content recorded on the data recording medium loaded in said server device based on the copied content data stored in said copied content data storage unit, when said update check unit determines that the copied content data has been updated.

13. The server device according to Claim 12,
wherein said copied content data storage unit is further configured to store, in association with the medium identification information, update indication information indicating whether or not the corresponding copied content data has been updated, and
said update check unit is configured to determine, based on the update indication information stored in said copied content data storage unit, whether or not the copied content data has been updated.

14. The server device according to Claim 12, further comprising
an update indication information read unit configured to read, from the IC memory through proximity wireless communication, update indication information indicating whether or not the copied content data has been updated,
wherein said update check unit is configured to determine, based on the read update indication information, whether or not the copied content data has been updated.

15. The server device according to Claim 12,
wherein said copied content data generation unit is configured to generate, as the copied content data, an image file of data recorded in the recording part, and
said update check unit is configured to determine whether or not the copied content data has been updated, by comparing file management information recorded in the recording part of the data recording medium loaded in said server device with file management information indicated by the copied content data.

16. The server device according to Claim 7, further comprising:
a reception unit configured to receive medium identification information from a terminal device connected through a communication network;
a medium identification information generation unit configured to generate new medium identification information; and
a transmission unit configured to transmit the generated new medium identification information to the terminal device,
wherein said copied content data storage control unit is configured to associate, with the new medium identification information, the copied content data stored in said copied content information storage unit in association with the medium identification information received by said reception unit.

17. The server device according to Claim 7, further comprising:
a device identification information read unit configured to read, from the IC memory through proximity wireless communication, device identification information identifying the IC memory,
wherein said copied content data storage control unit is configured to manage the read device identification information in association with the medium identification information.

18. A method of managing use of a data recording medium which is portable and includes a recording part readable by a computer, said method comprising:
reading, from the recording part, presence indication information indicating whether or not the data recording medium includes an IC memory accessible through proximity wireless communication;
reading, from the recording part, medium identification information identifying the data recording medium;
reading content data from the recording part;
generating a copy of the content data as copied content data; and
registering, in a copied content data storage unit, the generated copied content data in association with the read medium identification information,
wherein, in said generating,
the copied content data is generated when the presence indication information indicates that the data recording medium includes the IC memory, and
the copied content data is not generated when the presence indication information indicates that the data recording medium does not include the IC memory.
